# EUROPEAN PATENT APPLICATION

(11) **EP 2 241 998 A2**
(43) Date of publication of application: **20.10.2010**
(21) Application number: 10002187.2
(22) Date of filing: 03.03.2010
(51) Int. Cl.: G06K 9/20

(54) **Person authentication device**

(30) Priority: 14.04.2009 JP 2009097755
(71) Applicant: Hitachi, Ltd., Chiyoda-ku Tokyo 100-8280 (JP)
(72) Inventor: Miura, Naoto, Tokyo 100-8220 (JP); Kiyomizu, Harumi, Tokyo 100-8220 (JP); Nagasaka, Akio, Tokyo 100-8220 (JP); Miyatake, Takafumi, Tokyo 100-8220 (JP)
(74) Representative: Strehl Schübel-Hopf & Partner

(57) **Abstract**

To provide a finger vein authentication device that, while retaining high authentication accuracy, has high convenience and that uses a vein of a fingertip as a personal authentication device capable of being mounted on a small-size apparatus, such as a cellular phone and a notebook PC. The finger vein authentication device consists of an input device that includes a light source for irradiating light toward a finger and an image sensor for imaging light from the finger through an opening section, and an image processing part for processing an image photographed by the image sensor. The input device includes finger rests for specifying an end of the fingertip and a presentation position in the center, and a light shielding wall between the finger rest and the light source. The light source is located at the fingertip side of the finger mounted on the finger rest and is located on the surface of the input device or at a position lower than the surface, and light from the light source is directed slantingly upward and irradiates the back side of the fingertip, namely a nail side thereof.

## Description

### FIELD OF THE INVENTION

The present invention concerns a personal authentication device by a finger vein, and relates to a technology for improving authentication accuracy while maintaining convenience.

### BACKGROUND OF THE INVENTION

Among various biometric authentication technologies, the finger vein is known as one whereby highly accurate authentication can be realized. Since finger vein authentication uses a finger vein pattern inside the body, it can realize excellent authentication accuracy and its forgery and falsification are difficult as compared with fingerprint authentication; therefore, it can realize a high degree of security.

In recent years, there are increased examples where the biometric authentication device is mounted on a cellular phone, portable terminal devices, such as a notebook PC (Personal Computer) and a PDA (Personal Digital Assistant), and apparatuses, such as a locker, a safe, and a printer, so that security of each device is secured.

As a conventional example of this kind of finger vein authentication, a biometric authentication device described in Japanese Unexamined Patent Application Publication No. 2009-3492 is known, for example. As this device, a device specified to have a configuration that a light source is installed on an antenna part of the cellular phone, an upper lid of a foldaway cellular phone, or the like in order to mount a finger vein authentication device on a small-size terminal such as the cellular phone, and the finger is to be placed on a straight line connecting the light source and an imaging part so that it photographs the vein pattern by transmitted light.

Portable small-size terminals, such as the cellular phone and the PDA, are generally operated using a fingertip in many cases. Therefore, these terminals are designed be easy to operate by the fingertip. If the finger vein authentication device is mounted on such a terminal, its manageability can be improved by designing so that an operation at the time of authentication can also be performed by the fingertip as in the case of key operation. Moreover, since the cellular phones are designed to be easily operable with a single hand, it is desired that the authentication operation can similarly be performed with a single hand. From the above, in the case where the finger vein authentication device is mounted on the portable terminal, it is a necessary requirement that authentication can be performed with the fingertip, and in the case of the cellular phone, it is so that the authentication can also be performed with a single hand. Especially in the case of a single hand operation, convenience improves by the capability of performing authentication by a fingertip of the thumb. Also in the PDA to be operated while being held by both hands and the like, the authentication operation using the fingertip leads to miniaturization of the device and improved convenience.

The device disclosed in Japanese Unexamined Patent Application Publication No. 2009-3492 describes a small-size finger vein authentication device capable of being mounted on the cellular phone that uses the vein pattern mainly at a first joint of the finger and its vicinity. However, this description does not include an authentication method suited to a single hand operation, and technology disclosure and indications related to authentication by the thumb, and a method for mounting a finger that specializes in the fingertip. Furthermore, examination as to performing highly accurate finger authentication under an environment where extremely intense external light exists, such as clear sky, was not performed.

### SUMMARY OF THE INVENTION

Whereupon, the present invention has its object to provide a highly accurate personal authentication device that uses a vein of the fingertip including the thumb in order to realize a small-size and high-manageability authentication operation in a finger vein authentication device capable of being mounted on a small-size apparatus, such as a cellular phone and a notebook PC (Personal Computer).

In order to attain this object, the present invention provides a configuration, as a personal authentication device for performing authentication by the vein of a finger, including: a case that includes a finger rest on which the finger is mounted and an opening section for photographing the finger mounted on the finger rest; a light source for irradiating light toward the finger; an imaging element for imaging transmitted light from the finger through the opening section; and an image processing part for processing an image photographed by the image sensor; wherein the light source is installed in front of the finger mounted on the finger rest and an irradiation direction of the light of the light source is directed toward the back side of the finger.

Suitably, the configuration is specified so that the light is irradiated to the back side, namely a nail side of the finger mounted on the finger rest by installing the light source on the surface of the case or at a position lower than the surface and directing the irradiation direction of the light upward from the case surface.

Moreover, in order to attain the above-mentioned object, in this invention, the personal authentication device for performing authentication by the vein of a finger is configured to includes: a case that includes a finger rest on which a finger is mounted and an opening section for photographing the finger mounted on the finger rest; a light source for emitting light toward the finger; an imaging element for imaging transmitted light from the finger through the opening section; an image processing part for processing the image inputted from the image sensor; a support part that supports the light source and can make the light source move to above the fingertip of the finger; and a linking part for linking this support part to the case; wherein the light source moves to above the fingertip by the support part moving along a major axis direction of the finger.

Furthermore, in order to attain the above-mentioned object, the present invention provides a configuration, as a personal authentication device for performing authentication by a vein of a finger, that includes: an input device that has a finger rest on which the finger is mounted and the opening section for photographing the finger mounted on the finger rest; a light source for irradiating light toward the finger; an image sensor for imaging transmitted light from the finger; and an image processing part for processing an image acquired by the input device; wherein this image processing part detects a portion on which the external light is irradiated to the image imaged by the imaging element, controls an exposure time of the imaging element so that the detected portion on which the external light is irradiated may become with a proper luminance value, and reconstructs a vein image of the finger by synthesizing portions each having a proper luminance value among the plurality of images that were obtained under different exposure conditions.

According to the present invention, in the finger vein authentication device capable of being mounted on a small-size portable apparatus, such as the cellular phone and the notebook PC, it is possible to make a shape of the authentication device small-sized and planar and also to provide a highly convenient and highly accurate personal authentication device.

### BRIEF DESCRIPTION OF THE DRAWINGS

Fig. 1 is a functional block diagram showing one example of a finger vein authentication system according to a first embodiment;
Figs. 2A - 2F are schematic diagrams of a finger vein authentication device of the first embodiment;
Fig. 3 is a diagram at the time of use when a fingertip authentication device according to the first embodiment is applied to a cellular phone;
Figs. 4A- 4B are schematic diagrams of the vein authentication device for photographing the vein of a fingertip by sliding a lid according to the first embodiment;
Fig. 5 is a schematic diagram of the finger authentication device in which a light source is provided in the front lower part of the fingertip according to a second embodiment;
Figs. 6A - 6C are diagrams showing the finger vein authentication device for photographing including a contour of the fingertip and its photographed image according to a third embodiment;
Figs. 7A - 7B are diagrams showing the finger vein authentication device that includes a light shielding member on its upper part and photographs the contour of the fingertip, and its photographed image that concerns the third embodiment;
Figs. 8A - 8C are schematic diagrams of a finger rest on which the fingertip is mounted that concerns a fourth embodiment;
Figs. 9A - 9B are schematic diagrams of the finger vein authentication device for photographing the vein of a joint part of the finger that concerns a fifth embodiment;
Figs. 10A - 10B are diagrams showing the finger vein authentication device for photographing the finger vein located in front of the fingertip, and a photographed image that concerns a sixth embodiment;
Figs. 11A - 11C are diagrams for explaining an authentication processing of performing rotation correction of the finger using a fingerprint that concerns a seventh embodiment;
Figs. 12A - 12B are diagrams of the authentication processing of performing the rotation correction of the finger by irradiating reflection light to the palm side of the finger that concerns the seventh embodiment;
Figs. 13A - 13B are diagrams for explaining a light quantity adjusting method for synthesizing light intensities of the light sources of a plurality of wavelengths that concerns an eighth embodiment;
Figs. 14A - 14C are diagrams of a processing system for clearly photographing a vein pattern of the finger when being partially under an external light environment that concerns a ninth embodiment;
Fig. 15 is a schematic diagram of the vein authentication device provided with a finger rest on which the fingertip slants downward that concerns a 10th embodiment;
Fig. 16 is a diagram showing one example of a processing flow of a processing system for clearly photographing the vein pattern of the finger according to the ninth embodiment; and
Figs. 17A - 17F are diagrams for schematically explaining a processing system of clearly photographing the vein pattern of the finger according to the ninth embodiment.

### DETAILED DESCRIPTION OF THE PREFERRED EMBODIMENTS

Hereafter, embodiments of the present invention will be described using drawings.

### First Embodiment

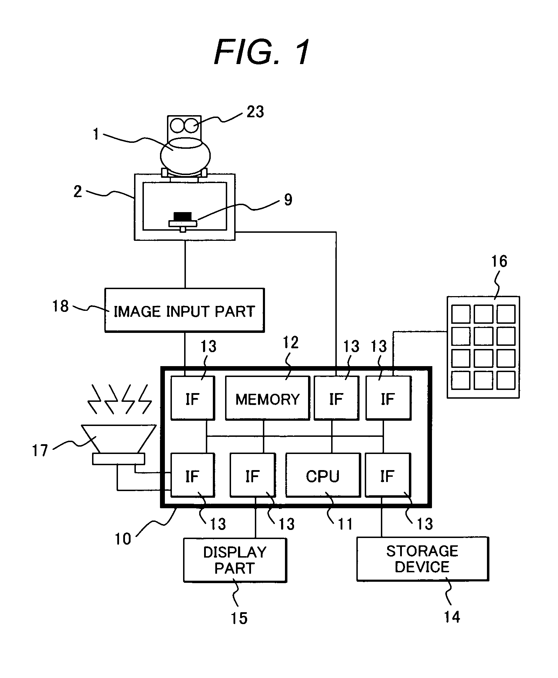

Fig. 1 is a block diagram of an entire finger vein authentication system of a first embodiment. The authentication system includes an input device 2, an authentication processing part 10, a storage device 14, a display part 15, an input unit 16, a loudspeaker 17, and an image input part 18. The input device 2 includes a light source 23 installed in the case and an image sensor 9 inserted in the interior of the case. Incidentally, there is a case where a portion of the image processing function of the authentication processing part 10 or that further including the image input part 18 is called an image processing part. Anyway, the authentication processing part 18 has a function of image processing.

The light sources 23 is light emitting elements, for example, infrared LED's (Light Emitting Diodes) etc., and irradiates infrared light onto a finger 1 presented on the input device 2. The image sensor 9 images the finger 1 that is presented to the input device 2. The image input part 18 inputs the image imaged by the image sensor 9 of the input device 2 into the authentication processing part 10.

The authentication processing part 10 includes a CPU (Central Processing Unit) 11, memory 12, and various interfaces (IF's) 13. The CPU 11 performs various processings by executing programs stored in the memory 12. The memory 12 stores the programs that the CPU executes. Moreover, the memory 12 temporarily stores the image inputted from the image input part 18. The interface 13 connects the authentication processing part 10 and an external device. Concretely, the interface 13 makes connection with the input device 2, the storage device 14, the display part 15, the input part 16, the loudspeaker 17 or the image input part 18, etc.

The storage device 14 has stored a user's registration data in advance. The registration data is information for verifying the user, for example, an image of a finger vein pattern, etc. Usually, the image of the finger vein pattern is an image of blood vessels (finger vein) that are distributed under the palm-side skin of the finger imaged as a pattern of dark shadows.

The display part 15 is, for example, a liquid crystal display etc. and is an output device for displaying information received from the authentication processing part 10.

The input unit 16 is, for example, a keyboard etc. and transmits the information inputted by the user to the authentication processing part 10. The loudspeaker 17 is an output device for transmitting information received from the authentication processing part 10 in sounds.

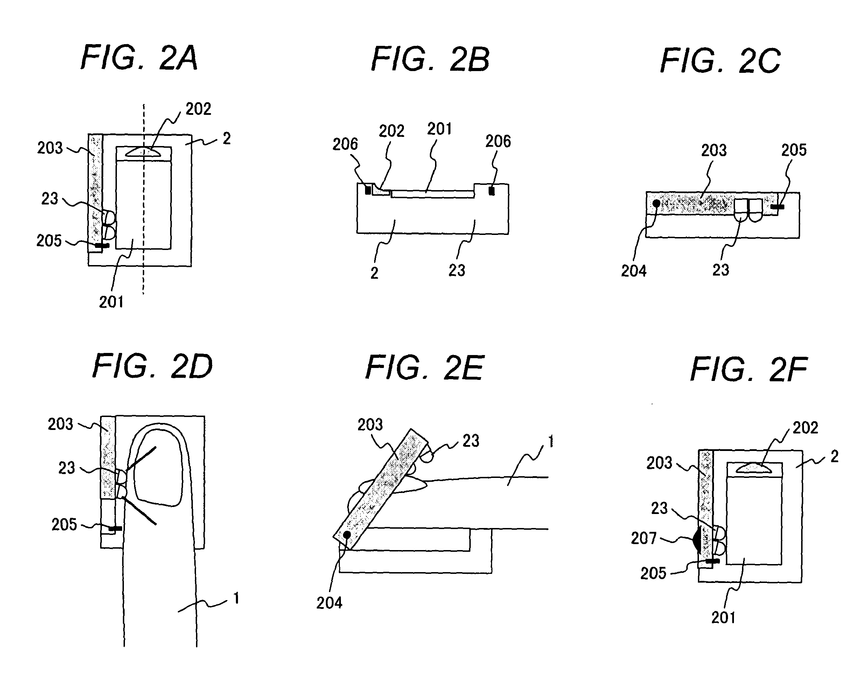

Figs. 2A - 2F show one example of the input device 2 in this embodiment, i.e., an input point of the authentication data of a finger vein authentication device for photographing the vein pattern of a fingertip. Fig. 2A is a top view of the device, Fig. 2B is a sectional view of a dotted line part, and Fig. 2C is a left-hand side view of Fig. 2A.

There is an opening section 201 for photographing the vein in the center of the input device 2, and in its interior an imaging element (the image sensor 9 with it) whose illustration is omitted, such as a camera, exists and photographs a range of the opening section width. Moreover, the opening section 201 consists of a transparent member to the infrared light, such as glasses and acrylic plates, and is installed mainly to prevent invasion of foreign substances into the interior of the device and breakage inside the device. Moreover, the opening section 201 is installed at a slightly hollow position from the surface of the input device 2, which prevents the blood vessel from being pressed by direct contact of the finger, as shown in Fig. 2B. A fingertip mounting base 202 is in front of the opening section 201. Suitably that the fingertip mounting base 202 is a hollow having a curvature suited to placement of the fingertip.

The light source 23 of this embodiment includes a light source support part 203, which is normally located on the same plane as the surface of the input device 2. Moreover, the light source support part 203 is linked together with a body of the input device 2 by means of a hinge 204, so that the light source support part 203 is movable in a fixed range about the hinge 204. Moreover, a latch 205 is for fixing the light source support part 203 and the body of the input device 2, and its fixation state can be cancelled by an electric control. The hinge 204 has an elastic member, such as a spring, in its interior, and exerts by it an action of elevating the light source support part 203 upward about the hinge 204. On the other hand, the latch 205 fixes the light source support part 203 so that it may not be elevated against the action. Moreover, touch sensors 206 are provided both near the fingertip mounting base 202 and on the opposite surface of the device that is across the opening section 201 away from it. These are for detecting a state of it when the finger of the user makes contact with it.

Figs. 2D and 2E are a top view and a side view at the time of use at a state where the finger is placed, respectively. The user places the fingertip on the fingertip mounting base 202 and further places the fingertip so that the palm side of the finger may make contact with the surface of the input device 2. Since the opening section 201 is narrower than a finger width, and is completely covered with the finger 1, unnecessary external light does not enter the image sensor 9 directly, which enables high-image quality photographing. When the finger 1 is placed, the touch sensors 206 installed in two places detect it.

At this time, the latch 205 is removed by a control of the CPU 11. Then, the light source support part 203 elevates as shown in Fig. 2E by an action of an elastic member located in the interior of the hinge 204. Since a locus on which the light source support part 203 moves does not cross the finger 1, operations can be done with the finger 1 placed thereon, which makes an authentication operation easy. When the light source support part 203 elevates to a maximum movable range, the light source support part 203 stops at the position. At this time, the light source 23 turns its direction to a direction of irradiating above the center of the opening section 201 and its vicinity.

If the light source 23 emits the infrared light in this state, the infrared rays will illuminate the upper part of the finger 1, roughly in the vicinity of a root of the nail. Then, the light scatters in the interior of the finger 1, and is transmitted through the finger 1 while being shielded by the vein existing near the skin of the palm side of the finger 1, and reaches the opening section 201. Then, it is photographed by receiving means, such as a camera, that is provided in the interior of the opening section 201. The finger vein near the fingertip is imaged in the photographed image. With the configuration of this embodiment, since the light source 23 is located in a place higher than the back side of the finger 1, the light is irradiated from the contrary side to a portion at which the vein is photographed, i.e., from the back side of the finger 1. Thereby, transmission light photographing where unnecessary light components not having information of the vein are hard to enter can be realized and the high-image quality vein pattern is obtained.

Incidentally, although the opening section 201 is made narrower than the finger width in this embodiment, the width may be widened so that the contour of the finger can be photographed. Thereby, a finger contour is acquired and correction of position of the finger and rotation becomes possible. In that case, a light shielding wall may be provided in the periphery so that the external light may not enter into the camera directly.

The authentication processing part 10 of Fig. 1 performs an authentication processing that uses the finger vein using the image obtained with the above-mentioned configuration. One concrete example of the authentication processing is as follows.

First, a light quantity adjustment processing is performed. In the light quantity adjustment, fine tuning of the light quantity value and photographing of the image are repeated based on the luminance value of the finger area of the photographed image, for example, by a method for bringing an average luminance close to a constant value, or by a method for maximizing the contrast of the vein included in the luminance profile of the image. Next, an electric noise of the imaging element or noises resulting from corrugates, dirt, etc. on the finger surface are removed by a smoothing filter or a band pass filter for cutting off information of a specific cycle or the like. Next, if the finger contour is photographed in the image, a contour extraction processing of the finger will be performed. For contour extraction, a general line-tracking technique is usable. Thereby, a position shift of the finger, a rotation shift, and a magnification shift can be corrected. Next, the vein pattern is extracted. For example, a method for taking out the center of the hollow area of a luminance profile as a blood vessel center, etc. can be used. Then finally, the comparison/collation between the vein pattern obtained by the above image processing function and the registered vein pattern is done to perform the authentication processing.

As a technique of this authentication processing, template matching, characteristic point matching, etc. can be used. Moreover, authentication robust to the variance in finger position is realizable by doing comparison/collation while sequentially correcting the position shift between data, the rotation shift, the magnification shift, etc. Any of these processing procedures can be applied to the authentication processing of this embodiment, and is not limited to this processing example.

Then, when the authentication is completed, the result is informed to the user by means of output devices, such as a loudspeaker, i.e., a guide lamp, sounds, or the like. Upon acceptance of this information, the user puts back the elevated light source support part 203 to the original position by pressing it down by the finger. At this time, this part comes back to a planner shape again, as shown in Fig. 2C, by an action of the latch 205.

By the above, photographing of a clear vein becomes possible only by a simple operation of placing the finger on the finger rest, and convenient and highly accurate authentication device can be realized. Moreover, since the device shape before the use is a planar structure, it becomes possible to built it in a cellular phone, a notebook PC, etc. that usually does not allow existence of unevenness.

Incidentally, the light source support part 203 may be configured to have a structure that is elevated upward manually. In this case, as shown in Fig. 2F, the light source support part 203 is attached a protrusion 207 for elevating itself, and if it is pinched by fingers or is elevated upward while being hooked, the latch 205 will be released. When it is elevated to a maximum movable range, the hinge 204 halts the light source support part 203 there. At this time, the hinge 204 does not need elastic members, such as a spring, the touch sensor 206 also becomes unnecessary, and a mechanism for electrically removing the latch 205 automatically becomes unnecessary; therefore, reduction of cost becomes possible.

Moreover, also in the shape that does not mount the protrusion 207 on it, the following mechanism may be adopted: by pressing down the light source support part 203 from a state of Fig. 2C, the latch 205 is disengaged and the light source support part 203 is elevated, and after the authentication, the light source support part 203 is set back to the original state by the finger, and when pressing it down further, the latch 205 is engaged and it returns to the state of Fig. 2C; that is, a mechanism that by pressing down the light source support part 203, the latch 205 is disengaged or engaged. This mechanism makes the protrusion 207 unnecessary and at the same time the elevation of the light source can be realized by a single hand operation only with a mechanical structure, which realizes reduction of cost and enhancement of manageability.

Moreover, in the configuration of the embodiment described above, although the light source support part 203 is set back manually, this may be automated. In this case, the hinge 204 includes a rotation control mechanism, such as an electrically controllable motor, which performs a rotation control in a direction of elevating the light source support part 203 at the time of detection of the finger, and performs a control of setting it back at the time of authentication completion. Thereby, the user does not become required to perform an operation of lifting up and down of the light source support part 203, and therefore the user's convenience improves.

Moreover, it is all right that the fingertip mounting base 202 is a mechanical press button and the latch 205 is configured to be released mechanically being interlocked with its pressing. Thereby, at the same time when the finger 1 is placed on the fingertip mounting base 202, the light source support part 203 is elevated automatically by an action of an elastic member of the hinge 204. Moreover, when returning the light source support part 203, it is pressed down by the fingertip. With this configuration, since an electric control mechanism becomes unnecessary, it contributes to reduction of cost.

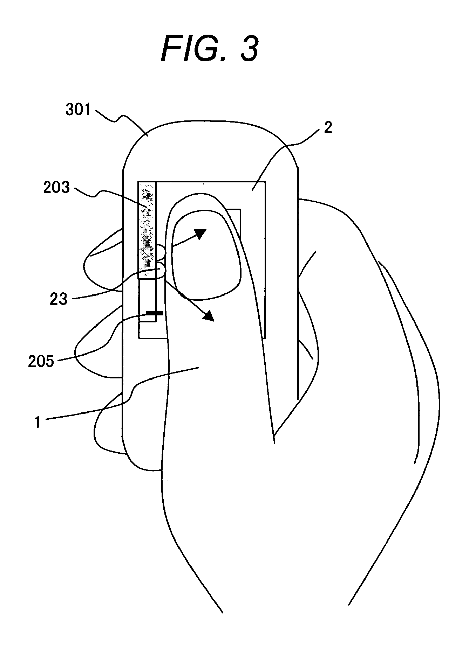

Fig. 3 is a diagram showing one example where a small-size finger vein authentication device according to this embodiment explained with Fig. 2 is mounted on the cellular phone. The input device 2 is attached to the surface of a cellular phone 301. The user holds the cellular phone 301 with a single hand, and performs the authentication processing with the thumb. Here, an example where the light source support part 203 is manually operated is shown. When elevating the light source support part 203, the latch 205 is disengaged by pressing down the light source support part 203 as described above, the light source support part 203 is elevated upward by an action of a spring. Subsequently, the thumb is placed on the opening section. Then, as described above, the light is irradiated from the back side of the thumb, the vein of the thumb is photographed, and the authentication processing of the image is performed. Thus, mounting the authentication device shown in Fig. 2 on the cellular phone makes possible the authentication operation with the thumb, while having the cellular phone with a single hand. That is, both the operation of the cellular phone and the authentication operation can be carried out with a single hand, and a highly convenient authentication device can be realized.

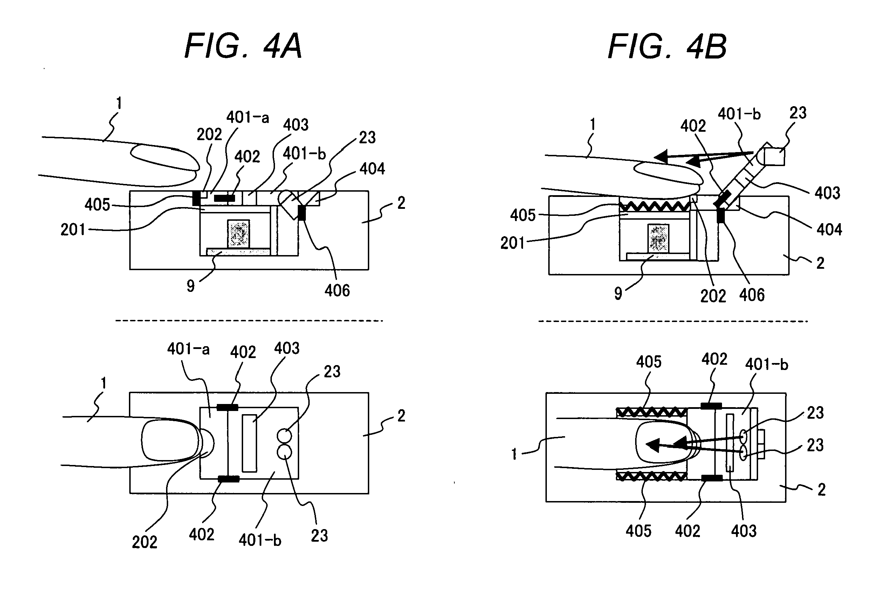

Figs. 4A - 4B are modifications of this embodiment described above, and is one configuration example that realizes vein photographing by transmitted light of light emitted by the light source from above the finger by sliding a lid provided on a surface of the device. In Fig. 4A, an upper row is a device sectional view and a lower row is a device top view. The lids provided on a device surface are made up of two lids of a lid 401-a and a lid 401-b. The lid 401-b includes the light source 23 and a hole 403 for nail relief, the lid 401-a includes the fingertip mounting base 202, and they are linked together with a hinge 402 that is a linking part. Moreover, the lids are linked with the body of the input device 2 with a spring 405 that is another linking part. The fingertip mounting base 202 is constructed as a hollow to the lid 401-b, and is formed as a curved surface suited to the curvature of the fingertip. Moreover, the two lids are movable about the hinge 402. Moreover, a support member 404 of the lid is installed on the right side of the lid 401-b, and the support member 404 of the lid is given a slant. Furthermore, a switch 406 for detecting that the lid is opened completely is attached.

Fig. 4B shows a structure of the device shown in Fig. 4A when being used. The user places the fingertip on the fingertip mounting base 202 so that it fits thereto. Then, the lid 401-a is slid in the direction of the front of the fingertip. Then, while the spring 405 is lengthened gradually, the lid 401-b is elevated to a slanting upward direction accompanying a slant of the support member 404 of the lid. Moreover, the lid 401-a maintains an angle in a horizontal direction that is the same as that of the device surface. That is, the link angle between the lid 401-a and the lid 401-b with the hinge 402 serving as a shaft becomes smaller gradually. Simultaneously with it, the opening section 201 covered by the lid appears in the device surface. Moreover, the lid and the body of the input device 2 have a guide structure, such as a rail, so that they may be able to move in a right-and-left direction of the figure smoothly, an is configured so that they may not become hard to be opened because the lid is caught and so that the lid itself may not get out of the case of the input device 2. When the lid is opened completely, the light source 23 is adjusted to be at an angel at which it irradiates the vicinity of the root of the nail of the finger 1, and at the same time the switch 406 detects that the lid is opened. Thereby, the infrared light is irradiated from the light source 23 to the back side of the finger 1 and the reflection light is received by the image sensor 9, whereby the photographing of a clear vein pattern and a highly accurate authentication processing are performed. When the authentication is completed, the user parts the finger 1 from the finger rest 201. At this time, the lid closes automatically by a force of the spring 405 and the lid returns to a state shown in Fig. 4A.

If the nail of the user's finger 1 is long, there is a possibility that the lid 401-b hits the nail when it is gradually elevated upward. Considering this, the hole 403 for nail relief is opened in the lid 401-b. Although if the length of the lid 401-a is secured so that the finger 1 and the lid 401-b may be sufficiently separated, the nail is prevented from making contact with the lid 401-b. However, in the case where the device is intended to be designed more compactly, formation of the hole 403 for nail relief shortens the distance between the finger and the lid and at the same time prevents contact of the nail, and thereby it is possible to realize both miniaturization and improvement in handiness.

Moreover, although in this modification, the two light sources 23 are installed, the number of light sources may be unity, or a plurality of light sources 23 may be installed. In the case where the plurality of light sources are installed, by changing each irradiation angle slightly to others, it is possible to uniformly irradiate infrared rays stably to the back side of various fingers different in thickness and shape.

One example of this technique is shown using Fig. 4B. First, the two light sources 23 are installed at mutually different angles so that one of them may aim at an area near the end of the fingertip and the other thereof may aim at an area far from the end of the fingertip, and further these light sources are provided with electric wiring so that they become able to be turned on mutually independently. Although an initial value of the light quantity that is irradiated just after the lid is open shall be a constant value determined in advance, regarding the transmitted image of the finger obtained here, its luminance value, the contrast of the vein, S/N ratio, etc. are measured with the image being divided into partial areas. When it is determined that the light quantity of the area near the fingertip is insufficient, the light quantity of the light source that irradiates the area near the fingertip is increased; when it is determined that the light quantity is excessive, the light quantity is decreased. Similarly, regarding the light quantity of the area away from the fingertip, the light quantity of the relevant light source is adjusted. By such a control, a control of the optimum light quantity that addresses a problem peculiar to the photographing of the fingertip that an average thickness differs depending on each finger and the thickness varies largely according to places can be realized.

From the foregoing description, in the configuration of this embodiment, light can be irradiated from above the back side of the finger by a simple operation of just placing the finger and sliding it toward the front while the device is in a completely flat state at the time of non-use, and a clear transmission image of the finger vein can be acquired, which makes it possible to realize the highly accurate and highly convenient authentication device. As a matter of course, similarly with application to the cellular phone shown in Fig. 3, even when this modification is mounted on the cellular phone, it s possible to realize a single hand operation by the thumb. Moreover, the device of this embodiment has an effect that at the time of non-use, the lid protects the opening section 201 or the image sensor 9, and prevents smudge by dirt etc. and physical breakage. Then, almost no irregularities exist on the surface of the input device 2, and can easily be incorporated into the cellular phone that has much restrictions in design or device size.

### Second Embodiment

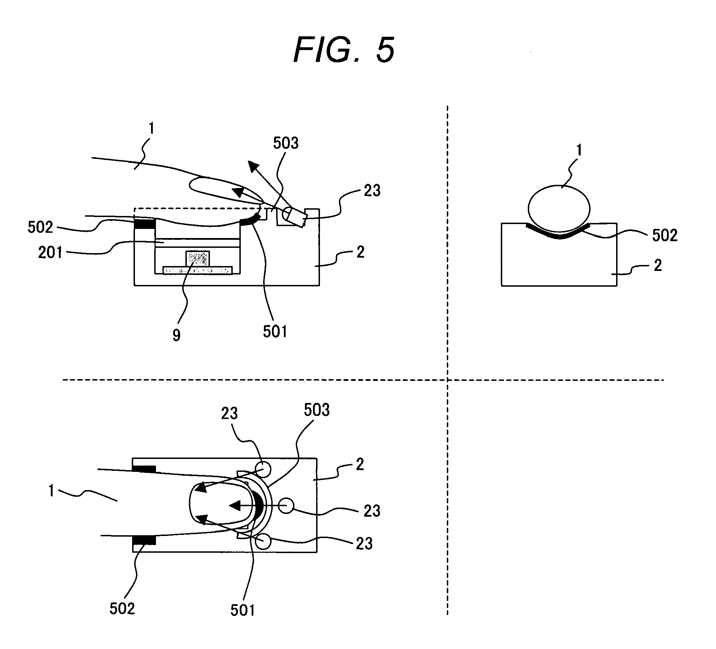

Fig. 5 is a block diagram of the finger vein authentication device of a second embodiment. This embodiment is **characterized in that** the light source is installed in front of the finger being placed, almost on the placement surface of the finger or at a position lower than that, an irradiation direction of the light source directs upward, and thereby the light hits the upper side, namely the back side of the finger to be authenticated.

The upper left of Fig. 5 is a sectional view of the device, the lower left is a top view, and the upper right is a side view when seeing the device sectional view from the left-hand side. The device includes a fingertip mounting base 501, a finger central mounting base 502, a light shielding wall 503, the image sensor 9, and the light source 23 made up of a plurality of infrared LED's. The fingertip mounting base 501 and the finger central mounting base 502 are installed so as to sandwich the opening section 201. The fingertip mounting base 501 is a hollow that is made to fit the curvature of the fingertip. The finger central mounting base 502 is a mounting base for supporting the central part and its vicinity of the finger that is away from the fingertip by a width of the opening section 201 and its cross section has a hollow that fits a curved line of the cross section of the finger, on this hollow the finger 1 being placed. These can prevent the position shift in the transverse direction of the fingertip or the entire finger.

Moreover, the light source 23 is installed at a height of the surface of the input device 2, and is disposed toward the back side of the finger 1. In this embodiment, the three LED light sources 23 are arranged in an arch shape corresponding to the contour of the fingertip, each of them being disposed so as to aim at a different place on the back side of the fingertip. Moreover, suitably, between the light source 23 and the finger 1, there is the light shielding wall 503 installed so that the light from the light source may hit only the back side of the finger 1 and may not hit directly the palm side of it. Moreover, the opening section 201 is installed at a position slightly caved in from the case surface of the input device 2 so that the finger surface may not contact therewith when the finger 1 is placed.

In the above configuration, when the user mounts the finger 1 matching to the fingertip mounting base 501 and the finger central mounting base 502, the input device 2 detects the finger. After that, the image sensor 9 is activated, and at the same time the light source 23 irradiates light to the finger 1. The light transmitted through the finger 1, and the image sensor 9 photographs the transmitted light. The light source 23 irradiates a base side of a nail and its vicinity from the lower part in front of the fingertip. Due to a relationship between the height at which the light source 23 is installed and the height of the light shielding wall 503, the light is irradiated only to the back side of the finger 1.

Thereby, when the palm side of the finger is photographed by the image sensor 9 through the opening section 201, only a light component that passed through the vein without including the unnecessary reflection light can be photographed, and a vein pattern of the fingertip and its vicinity is photographed clearly. Therefore, highly accurate finger vein authentication can be realized using this image. Incidentally, as a finger detection method, similarly with the above-mentioned embodiment, contact detection means such as a touch sensor may be mounted on the fingertip mounting base 501 or the finger central mounting base. Moreover, activation of the image sensor 9 may be performed by another means, such as key entry, and existence/absence of the finger may be determined while photographing the image.

In the device according to this embodiment, three light emitting elements that act as light sources are arranged with their optical axes shifted so that each of them may irradiate a slightly different portion. In this example, the light sources are installed so as to irradiate three areas of the center of the nail and the right and left of the root side of the nail. As referred to in the embodiments described above, by independently controlling each light source and giving optimum control to the each portion, it becomes possible to perform light quantity control that suits to various thicknesses and various shapes of the finger. Moreover, a light source may be increased further in number and the similar structure may be extended to the side direction of the finger. By this modification, light is irradiated with a uniform light quantity and a quality of image is improved. Furthermore, alternatively, it may be all right that the light source or a group of several light sources are turned on sequentially and a plurality of images are photographed for each of partial areas where the vein is clearly seen, and these images are synthesized to produce one sheet of vein image. Thereby, transmitted light components to unnecessary reflection light components increase, so that the quality of image can be increased. Moreover, the fingertip mounting base 501 can serve the purpose of the light shielding wall 503. Thereby, the structure is simplified and a manufacturing cost falls.

By the configuration of the second embodiment described above, the miniaturization of the device can be realized by giving a flat structure to the surface of the device and by photographing only the fingertip, and stable highly accurate authentication can be realized because high-image quality photographing by the transmitted light becomes possible.

### Third Embodiment

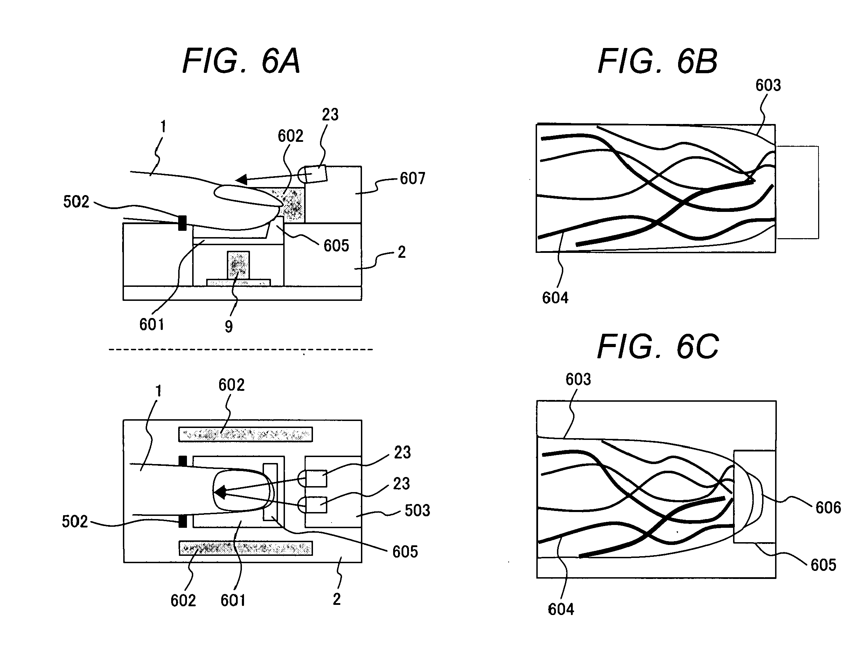

Figs. 6A - 6C are diagrams showing one example configuration of the finger vein authentication device for photographing the finger vein image including a contour of the fingertip that concerns a third embodiment. The upper part of Fig. 6A is a sectional view of the device, and the lower part is a top view thereof. The device is constructed with the light source 23, the image sensor 9, the finger central mounting base 502, a light source support part 607, a side wall 602 for light shielding, and an opening section 601 attached with fingertip mounting base. The opening section 601 attached with fingertip mounting base is made up of a member transparent to the infrared light. Moreover, the right-hand side of the figure sheet bulges as a protrusion, and this protrusion part 605 serves as the fingertip mounting base. A hollow is formed in this protrusion part 605 to adapt to a curvature of the fingertip, whereby the fingertip can be placed so that the fingertip may not shift. Furthermore, since this makes only the fingertip contact, it prevents the palm side of the finger from being pressed, a blood flow from being halted, and the vein pattern from becoming unobservable. Moreover, the side walls 602 for light shielding bulge on the both sides of the finger, and play a role of preventing the unnecessary external light entering at the sides of the device from hitting the surface of the finger 1.

The user mounts the finger 1 so that it matches the finger central mounting base 502 and the protrusion part 605 of the opening section 601 attached with fingertip mounting base. The light source 23 installed in front of the fingertip irradiates the infrared light toward the back side of the fingertip, and its transmitted light is photographed by the image sensor 9. A flow of the processing of authentication using the vein pattern of the fingertip is fundamentally the same as that of the embodiments hitherto shown, but this embodiment has an advantage of being capable of performing a higher-accuracy processing using contour information of the fingertip.

Fig. 6B is a schematic diagram of the finger vein image in the previous embodiments shown in Fig. 2, Fig. 4, and Fig. 5. In this case, since the fingertip includes the finger rest or the fingertip rest, and it has the opening section narrower than the width of the finger, the fingertip is not photographed and a contour of the side of the finger can hardly be photographed. Therefore, only a part of a finger contour 603 and a vein 604 are shown. If in the each embodiment described above, the width of the opening section is secured to be wider than the width of the finger, the finger contour 603 shown in Fig. 6B will be able to be checked more clearly. In the authentication processing in that case, in order to effectively correct the position shift and the rotation shift of the finger vein image being photographed, the finger contour is extracted by an image processing such as a line tracking processing and the following corrections can be performed: a position correction in the vertical direction of the diagram that corresponds to running positions of the finger contour; a magnification and contraction correction that corresponds to widths of the finger contour; and a rotation correction that corresponds to angles of an approximated straight line of the finger contour. However, since the fingertip was not still photographed, the position in the right-and-left direction of Fig. 6B, i.e., in a longitudinal direction of the finger cannot be grasped from the finger contour; therefore, this position shift was not able to be uniquely corrected.

Fig. 6C shows the finger vein image photographed by the device according to this embodiment of Fig. 6A. The image takes in it the finger contour 603 including the fingertip, the vein 604, the protrusion part 605 of the opening section attached with the fingertip mounting base, and a nail 606. Although the vein pattern of the fingertip is pressed by the protrusion part 605 and cannot be observed, the finger vein 604 can be checked in other areas. Moreover, the contour portion of the fingertip can also be checked clearly. In a finger contour detection processing, the finger contour is extracted by an image processing such as the line tracking processing including the fingertip by the authentication processing part 10 using the photographed finger vein image. For example, by a software processing of the CPU 11 of the authentication processing part 10, the contour of a periphery of the finger can be obtained by a method as follows: a point having a most intense edge among rasters in the longitudinal direction rasters on the left of the image is defined as a starting point of tracing, the tracing is started from the point, edges in the surrounding of the point that is traced currently are found, and the tracing point is moved sequentially to coordinates having the most intense edge.

However, there is a possibility that a contour of a nail 606 is erroneously detected as the contour of the fingertip. Therefore, when performing the authentication processing by the CPU 11 of the authentication processing part 10, making use of a characteristic that in the surrounding of a position at which the contour of the fingertip and the contour of the nail cross, its curvature is inverted in a sign from that of the contour of the fingertip, in tracing the contour of the fingertip and its vicinity, if tracing the contour goes by a constant distance or more in a direction where the sign is different, it is considered that there is a possibility of tracing the contour of the nail erroneously, the tracing goes back to a point at which the sign of the curvature is inverted and tracing is done so as to detect edges in the surrounding while a direction is limited to one where the sign of the curvature does not invert. Thus, by performing tracing on the image like this, a curved line of the finger contour in the periphery excluding a base side of the finger can be obtained with an excellent accuracy and thereby a position of the fingertip can be defined.

Incidentally, if adopting a method for simply determining the contour located at the rightmost position in the figure as an end of the finger, a calculation cost will be held down, but if the finger is photographed when the finger rotates largely, the end of the finger is not necessarily located at the rightmost position. Therefore, in order to find a more accurate position stably, a point at which an extension line of an approximated straight line passing through a midpoint of the counter line of the both sides of the finger crosses the contour of a curved line portion of the fingertip is defined as the fingertip. By conducting position correction so that this fingertip position comes to a fixed place, position correction of the finger in the longitudinal direction also becomes possible. Conventionally, it was assumed that the obtained vein pattern included a position shift of some degree, and the searching of a best match position was performed by shifting a position of the pattern so that the patterns match best with each other when performing comparison/collation of the two. This presented problems that much computational complexity was needed and that mutual similarities of the different vein patterns came nearer to each other because the position shift was allowed excessively. However, by the technique described above, the tolerance can be made small, which contributes to speed-up of the processing by the CPU 11 and achievement of higher accuracy.

The above-mentioned technique of uniquely correcting the position and rotation of the finger by contour information of the finger including a position of the fingertip can be applied to a speed-up technology of 1: N authentication that identifies the user among large-scale registration data. As a main method of speed-up, there is one that classifies all the vein patterns into several classes based on features of the finger vein and performs collation with one another by limiting the patterns to be within the same class to attain the speed-up. As methods for classifying into classes, there are several methods based on, for example, the number of vein blood vessels, the number of branches, and area that the vein occupies in the whole, etc. Even with the same finger, if a position of photographing differs, these features will change. For example, if the finger is inserted too far into an innermost position than a usual position, the vein at the base side that is not usually photographed will be observed. Thereby, the apparent number of veins changes. Therefore, in the conventional technology, a classification result differs depending on how to place the finger, and a possibility that the user will not be authenticated correctly increases. On the other hand, in this embodiment, since the position of the fingertip can be photographed, a position shift quantity in the longitudinal direction can be grasped in addition to the right-and-left direction of the finger, and the vein always at the same position can be analyzed. Thereby, the classification that is not dependent on the position shift of the finger becomes possible.

Continuously, one example of a processing of performing high speed collation by the classification using a normalized vein patterns by the CPU 11 of the authentication processing part 10 will be explained. First, a coordinate array of the finger contour including a contour of a curved line portion of the fingertip is acquired by a general finger contour detection processing. A rotation correction processing of the finger is performed based on this information. Then, an extraction processing of the vein pattern is performed and the vein pattern is acquired as a binary or multiple-valued pixel array. Next, coordinates of the fingertip are acquired by the method described above. Then, an area of the vein to be used for authentication is defined on the basis of the position of the fingertip. For example, the coordinates of the fingertip is defined as the right edge of the area, and the coordinates of the both sides of the finger that are most separated by a width of the contour are defined as the upper edge and the lower edge of the area. The left edge is defined uniquely by a ratio of the upper edge and the lower edge. The area defined in this way is subjected to the magnification correction so that a distance between the upper edge and the lower edge may become a specific value. Thereby, even when the position at which the finger is placed changes slightly, since positions of the finger in two directions of the side direction and the longitudinal direction, the rotation shift of the finger, and a magnifying ratio of the finger are normalized at the same time, it becomes possible to use the vein of the same place always stably.

Next, the authentication processing part 10 extracts a feature quantity that corresponds to the feature quantity of the registered vein pattern. The feature quantities include the number of vein patterns, the total area, an average direction component of line directions along which the veins run, the number of branches of the vein, an average length, etc. Since the vein pattern can be acquired as a multiple-valued pixel array, the total area of the vein is obtained, for example, by counting the number of pixels that constitute the vein. Moreover, by detecting the branching point of the vein by thinning of the vein pattern and the tracking processing, the number of branching points of the vein, the number of the veins, the average length, the average direction components, etc. can be obtained.

The authentication processing part 10 retains the obtained feature quantity of the vein in the storage device 14 as vector information and uses it for the classification. First, it calculates feature quantities of all pieces of registered data and obtains degrees of mutual similarity by distance calculation of the vectors. Next, by using a technology of, for example, SOM (Self-organizing maps) on these pieces of information, a map that associates a distance of the vector and the spatial coordinates has been automatically created. Then, the class is classified so that pieces of data in a close distance to each other spatially may be in the same class. Determination as to in what distance they are located are classified in the same class is defined according to the number of classes in which the data is intended to be classified. Moreover, data indicating a distance between the classes is also retained.

When the vein pattern is given as an input using the input device 2, the authentication processing part 10 vectorizes the feature quantity of the vein similarly as described above. Then, distance calculation with typical vector data in the class being retained is performed, and it is checked, to which class the inputted pattern is closest. The class obtained there is a class of the data being inputted. After that, comparison with all pieces of the registration data classified into that class is performed. Thereby, a comparison processing can be performed at high speed, without performing comparison with all the registered data. Incidentally, in consideration of a possibility that there is an error in defining the class, the comparison processing may also be performed regarding an other class near the classified class in terms of distance. Thereby, degradation of authentication accuracy can be reduced.

As described in the foregoing, according to this embodiment, it is possible to define the absolute position of the vein pattern by photographing the finger contour including the fingertip, and pattern formation and calculation of the feature quantity that eliminate influences of any position shifts can be performed. This enables the position shift quantity at the time of collation to be reduced and enables the classification to be stabilized, so that it can contribute speed-up and achievement of higher accuracy.

Incidentally, by detecting that the coordinates of the contour obtained by the above-mentioned contour detection processing are in contact with the right end of the image, an exceptional state where the fingertip is not included in the image can also be detected. In this case, the authentication processing can be forcibly performed, or a warning that the finger goes too far into an innermost position can also be outputted. When performing the authentication, by setting wide a position shift search range at the time of comparison to execute it, the authentication accuracy can be maintained without demanding finger replacement of the user.

In the foregoing description, the input device 2 was explained using a configuration shown in Fig. 6. However, the device configuration is not limited to one shown in Fig. 6 as long as it can photograph the finger contour including the fingertip, and various modifications are possible: a position of the light source 23 may be located at a position shown in Fig. 5, for example.

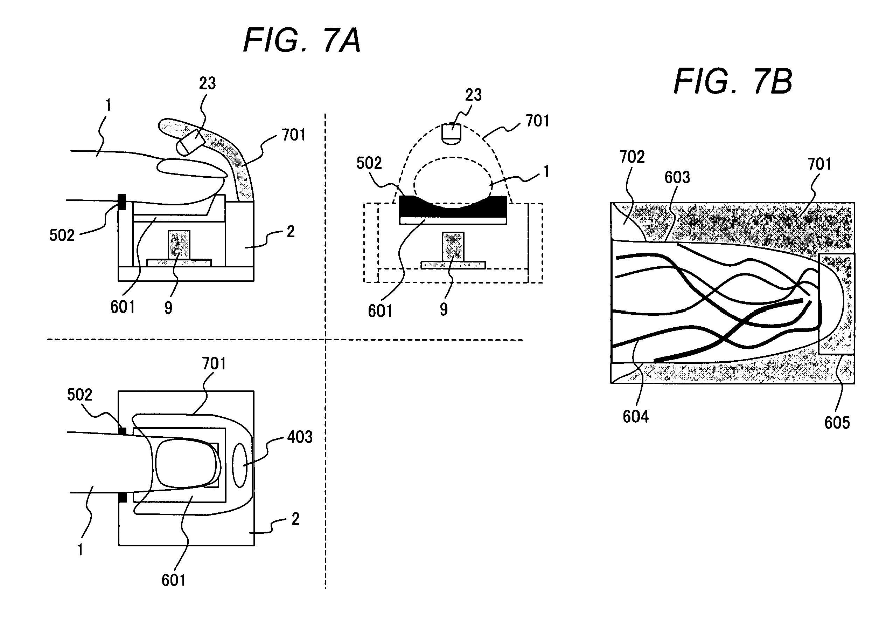

Figs. 7A and 7B show one modification example of the finger vein authentication device for photographing the vein of the fingertip without being affected by the external light, and its input device as another mode of this embodiment. In Fig. 7A, a sectional view of the device is shown at the upper left of the figure, a top view of the device is at the lower left, and the side view of the device is at the upper right. A roundish light shielding member 701 is provided above the finger 1, and the light source 23 is installed in the upper part of its inner side and irradiates the transmitted light from above the finger 1, i.e., from the back side thereof. Moreover, the hole 403 for nail relief is provided in the fingertip side of the light shielding member 701. Other configuration is the same as that was shown in Fig. 6 described above. The light shielding member 701 prevents the unnecessary ambient external light from being imaged in the image sensor 9, and prevents the unnecessary external light from being irradiated to the sides of the finger. Furthermore, by specifying its inner wall to be made of a paint or material on which no infrared light reflects, it is possible to prevent image quality deterioration of the transmitted image of the vein.

The user inserts the fingertip into this to place the finger. At this time, since the user inserts only the fingertip, a distance of insertion is short and this operation does not impair manageability. Moreover, since the user can view the inside easily, this operation gives an advantage of not feeling mental resistance of inserting the finger into the inside of the device like the conventional technology. Moreover, the hole 403 for nail relief is opened in an extension direction of the fingertip, so that it becomes possible to place a finger with a long nail, a finger with an artificial nail, etc. In the case where a sufficient distance can be set between the fingertip position and the light shielding member 701, it is not necessary to open the hole 403 for nail relief, and thereby the unnecessary external light is prevented from entering it.

Fig. 7B shows one example of an image photographed by the device shown in Fig. 7A. The figure shows that although an external background 702 is seen slightly in the left side of the image far from the fingertip, the external light is almost intercepted by the light shielding member 701; therefore, there is no penetration of the unnecessary external light, photographing of the clear vein is possible, and at the same time the contour part of the fingertip is clearly imaged. Thereby, the accuracy of the contour extraction in the image processing is increased, and it becomes possible to improve the authentication accuracy stably. Incidentally, a situation where the external background 702 is not taken in can easily be attained due to a relationship of a shape of the light shielding member 701, a position of the image sensor 9, an angle of view, etc. For example, there are methods of enlarging the light shielding member 701, getting the image sensor 9 closer to the fingertip, narrowing an angle of view, etc. Moreover, for the authentication processing using this device, one that is exemplified in Fig. 6 can be applied.

### Fourth Embodiment

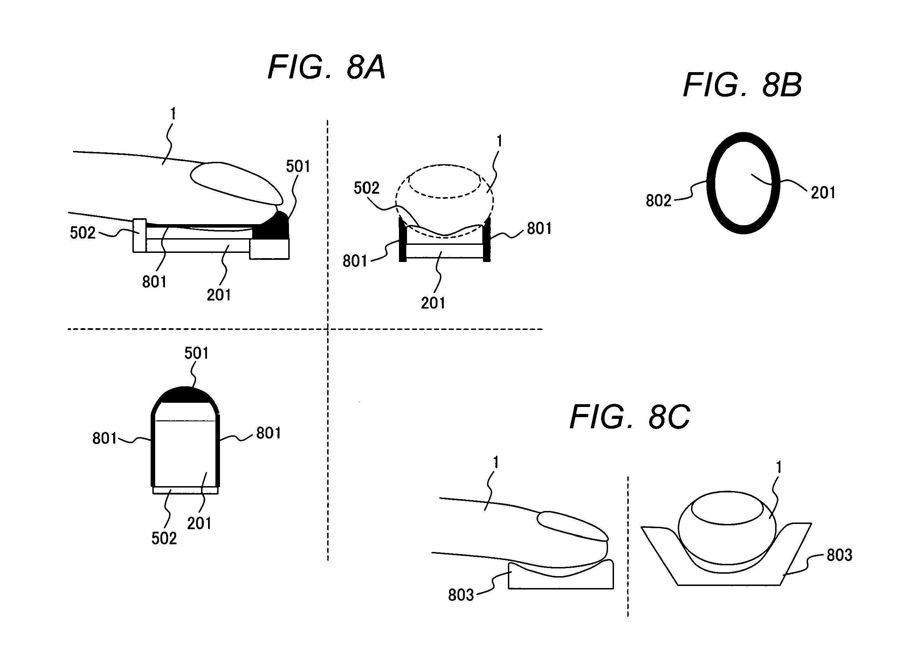

Figs. 8A - 8C are diagrams showing some other configuration examples of a form of the finger rest as a fourth embodiment. In Fig. 8A, a side view of the finger rest is shown at the upper left, a top view is shown at the lower left, and a section view is shown in the upper right. In the device of a system where the fingertip is photographed with the fingertip mounted on the device, it is necessary to construct a finger rest that does not press the palm side of the fingertip. A form of the fingertip mounting base 501 is made up of a curved line that is made to fit a shape of the end of the finger and the finger central mounting base 502 of the finger has a curvature that fits a shape of the finger so that the finger is easily placed, that is, a curvature that fits the curved line of the cross section of the finger. Furthermore, a finger lateral side mounting base 801 has formed to be convex so that the finger 1 may adhere to it and the unnecessary external light is prevented from proceeding from a gap between the finger and the finger rest. Moreover, as is shown by the section view at the upper right of Fig. 8A, its cross section includes a slant in the lower part thereof from a far portion of the opening section toward the center of the opening section. This is for keeping away a contact part of the finger 1 and the finger lateral side mounting base 801 from the opening section 201. Thereby, when the finger is pressed to the finger lateral side mounting base 801, a portion that becomes unobservable because the vessel is mashed by its pressing is kept away from the opening section. Therefore, the blood vessels that cannot be photographed decrease in number, which gives an advantage of preventing degradation of the authentication accuracy. Moreover, since a structure of this finger rest enables an end position of the finger and a position of the base side of the finger to be easily fixed and lessens the position shift of the finger, the authentication accuracy can be increased.

Incidentally, regarding the top view shown in the lower left of Fig. 8A, each shape of the opening section 201 and the finger lateral side mounting base 801 may be in the form of an ellipse that fits a round shape of the palm side of the fingertip as shown in Fig. 8B. In a finger periphery mounting base 802 that becomes a portion of the ellipse, the fingertip rest etc. is not constructed particularly, and since the user places his/her finger so as to fix roundness of the fingertip even without this, a large position shift will not be generated. Moreover, since the palm side of the fingertip is roundish, and this roundish part contacts the finger rest as a whole, the external light is easy to be intercepted and the authentication can be performed under the external light environment. Moreover, since the fingertip makes contact with the finger rest with uniform pressure, an intense pressure that is partially biased becomes hard to be produced, and at the same time since a feeling of fitness of the fingertip is high, it has an effect of reducing the sense of incongruity that the user feels.

Moreover, a member itself that is applied to the opening section may be used as the finger rest. Fig. 8C shows a finger rest having a curved surface opening section on which a hollow that matches the curvature of the fingertip is given. When the fingertip is placed on the finger rest, the roundness of the palm side of the finger falls in the hollow of a curved surface opening section 803, but the place that it contacts is only the vicinity of periphery near the contour of the finger, leaving a gap in the palm side area of the finger. Thereby, a portion that is pressed escapes to the vicinity of the side of the finger 1 and the vicinity of the end of the finger, and it is possible to prevent a central area to be pressed. Moreover, since with this structure, the fingertip can be photographed, high-speed and highly accurate authentication using the coordinates of the fingertip becomes possible as described above.

### Fifth Embodiment

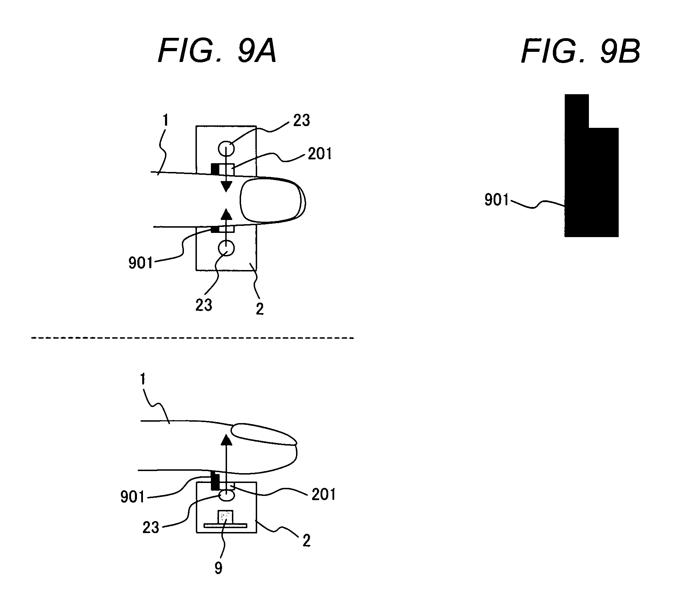

Figs. 9A and 9B concern a fifth embodiment and is a diagram showing a device configuration that realizes finger vein authentication by performing photomacrography of the vein in the vicinity of the joint of the fingertip. The upper part of Fig. 9A is a top view, and the lower part is a side view. The input device 2 includes the light source 23, the opening section 201, and a joint part mounting base 901 as the finger rest. The joint part mounting base 901 protrudes slightly from the device surface and the user can feel its contact when placing the finger thereon.

The user places a joint part of the fingertip to the joint part mounting base 901 so that the joint part may fit there. Generally the joint part of the finger has a hollow in, and since it is easy to fit this hollow to the joint part mounting base 901, and feeling that is obtained when the joint part is contacted thereto is peculiar, positional alignment becomes easy in terms of the structure and the feeling, providing high manageability, and the position shift is hard to occur. Moreover, the cross section of the joint part mounting base 901 has a structure such that an edge of a portion away from the opening section 201 protrudes. This situation is clear from a sectional view of the joint part mounting base 901 shown in Fig. 9B. This configuration is to locate the contact part making contact with the finger 1 away from the opening section 201 and thereby to prevent the vein of the area to be photographed from disappearing.

In this state, the light source 23 is turned on toward the finger 1. Although this embodiment adopts a method for photographing the finger with transmitted light by irradiating the light from below the side of the finger toward above the finger 1, an arrangement of the light source 23 is the same as the above-mentioned embodiments in a method for disposing it above the finger or in front of the fingertip, and further in a method for disposing it on the palm side of the finger. Since the opening section 201 exists at a position at which the joint part and its vicinity are photographed, a vein of the fingertip in the vicinity of the joint will be photographed. Since especially the joint part has thin skin, the photographing of the vein clearer than other parts is obtainable. Moreover, since the image sensor 9 photographs more vein patterns from a narrow area, it is possible to photograph a thin blood vessel clearly by performing high-resolution photographing, which increases the authentication accuracy. Although it is possible to photograph the vein of the fingertip in the vicinity of the joint by adjustment of the size, the position of the opening section, etc.; by adopting the device configuration of this embodiment, the device becomes a small-size and planner structure, and therefore it is possible to realize an authentication device that is easy to perform alignment, has an excellent usability, and is stabilized in authentication accuracy by high-image quality photographing of the vein.

### Sixth Embodiment

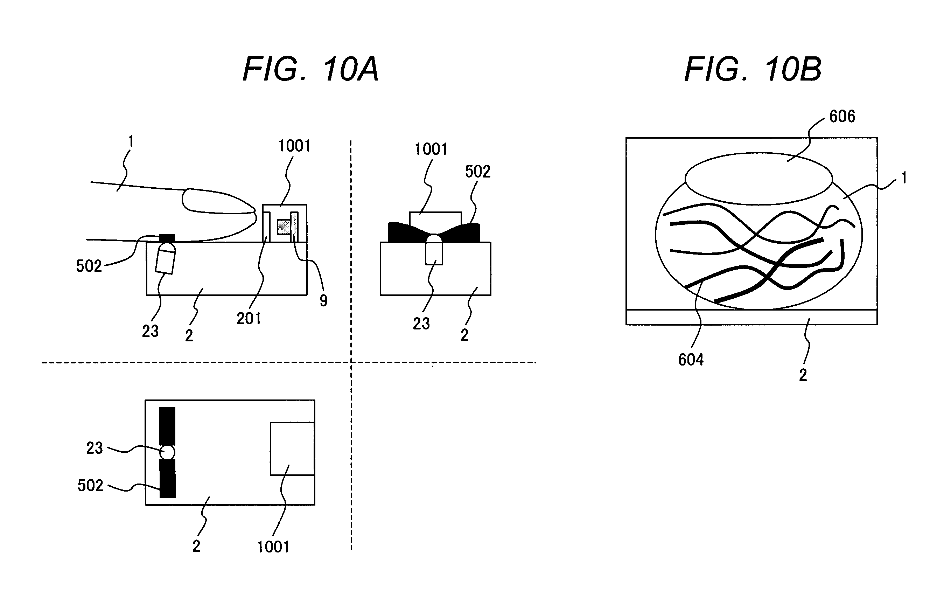

Figs. 10A and 10B show one embodiment of a device configuration of the finger vein authentication device for photographing the veins that are distributed at the end of the fingertip. Fig. 10A shows a device configuration example. An imaging element support part 1001 exists in the fingertip side of the finger 1, and the opening section 201 and the image sensor 9 are provided in its interior. Moreover, there is the finger central mounting base 502 at the base side of the finger 1, and the light source 23 is installed there. The user places a first joint of the finger and its vicinity here. The light source 23 irradiates light toward the inside of the finger from the vicinity of the first joint of the finger 1. Then, the image sensor 9 receives light transmitted from the vicinity of the fingertip of the finger 1.
In order to clearly photograph the vein, it is important to irradiate light so that components of the reflection light may not be contained as less as possible, and this is realizable by installing the light source 23 and the image sensor 9 so that a place to which light is irradiated and a place at which the light is photographed may be opposed to the finger. In this configuration, since the light is injected from a first joint part and is transmitted toward the fingertip, photographing from the fingertip side becomes photographing of transmitted light. This enables an image including the clear vein pattern to be acquired.

Fig. 10B shows one example of an image that photographed the vein pattern of the fingertip. From the figure, one can see how the vein patterns 604 distribute under the nail 606. Moreover, with this photographing principle, even when the user presses the palm side of the finger to the device hard, since an end of the finger and its vicinity that are actually photographed do not have a contact, they are not pressed. Therefore, the vein of the fingertip portion can be observed stably. Moreover, for a more stable authentication processing in the program processing of the CPU 11 of the authentication processing part 10, an end area of the finger is specified by extracting a contour of the finger 1 and a contour of the nail 606 by the above-mentioned technique etc., and rotation correction in a rolling direction of the finger 1 and a correction of the magnifying ratio are performed using these contour information. For example, although a contour of the finger 1 is a horizontally long elliptic form, rotation of the finger slants the major axis of the ellipse of the finger contour or the ellipse of a nail contour to the horizontal direction of the image. The rotation correction is made possible by uniquely normalizing this slant.

In order to prevent the ambient external light from hitting the fingertip, a light shielding wall may be provided in the outer periphery of the fingertip. Thereby, accuracy deterioration by the external light can be prevented. Moreover, a hollow having a curvature that fits the shape of the palm side of the fingertip may be provided on the input device surface on which the palm side of the fingertip is mounted. Thereby, the position shift can be prevented. Moreover, although in this embodiment, the light source 23 is installed under the finger, even if it is installed on its side or above it, photographing of the vein of the fingertip portion is applicable. In the case where the light source 23 is installed at other positions, if it is installed so that light may hits the root of the nail of the back side of the finger and its vicinity, the quality of image will be able to be increased.

### Seventh Embodiment

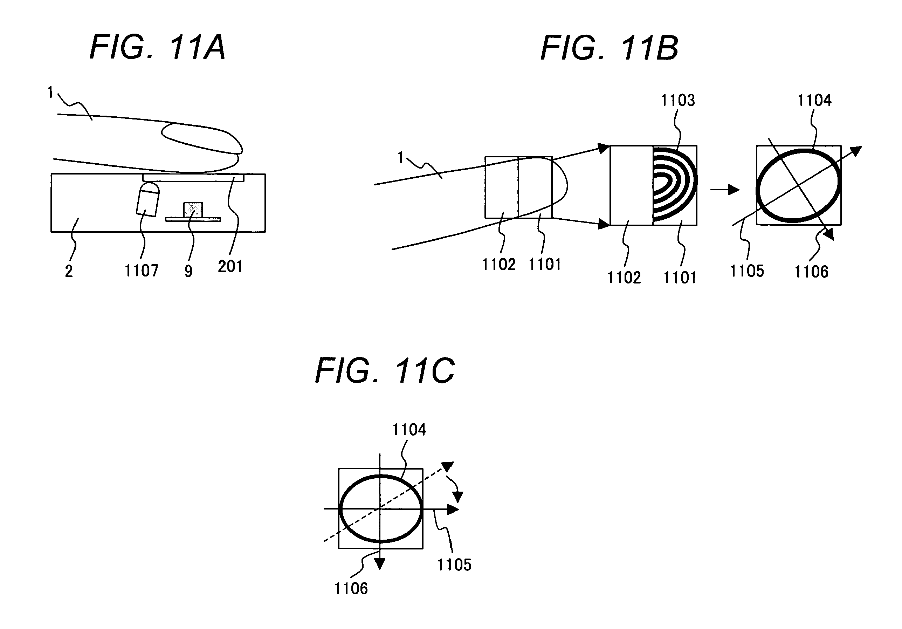

Figs. 11A - 11C concern a seventh embodiment, showing a configuration of one embodiment that the authentication processing part 10 corrects rotation of the finger by photographing a fingerprint of the fingertip. In order to miniaturize the device, it is necessary to make the opening section for photographing as small as possible. In accompany with it, a situation is postulated that the finger contour becomes impossible to photograph and the rotation correction based on the finger contour, as shown by the previously explained conventional technology, cannot be performed. Considering this, in this embodiment, the rotation of the image of the finger being photographed and the magnifying ratio are corrected by fingerprint information detected by a fingerprint detection part.

Generally, the fingerprints of the fingertip are divided roughly into a shape of a vortex, a shape of a hoof, and a shape of a bow. Although these are different in the entire structure, in an area close to the end of the finger, these have a common point in rolling up a curved line according to a roundish form of the fingertip. Moreover, this curved line can be considered as a part of an ellipse. Therefore, the rotation angle can be corrected uniformly by estimating an ellipse from line information of the fingerprint of an area near the end of the finger among the fingertip areas and checking an angle of its major axis. Moreover, by checking a line gap of the fingerprint and performing a magnification correction so that they may become uniform, position correction to float of the finger becomes possible.

Fig. 11A shows one example of a fundamental device configuration that realizes this embodiment. The input device 2 includes the opening section 201, the image sensor 9, and a reflection light source 1107. The reflection light source 1107 that constitutes the fingerprint detection part together with the image sensor 9 is located at an inner side of the device than the opening section 201 and irradiates the reflection light to the fingertip of the finger 1. When the reflection image of the fingertip is photographed by the image sensor 9, the fingerprint that is distributed on the fingertip can be observed. At this time, the intensity of the reflection light is adjusted so that the fingerprint may be imaged most clearly. Moreover, photographing of a reflection image is performed at a different timing from photographing of the transmitted vein image. Incidentally, the reflection light source 1107 for fingerprint photographing may be installed independently from the light source used in photographing the vein of the finger previously, or may use the same light source.

Fig. 11B shows a fingerprint image in a state where the finger is placed having been rotated slightly and a rotation correction method. By the execution of the image processing program, the CPU 11 of the authentication processing part 10 divides the fingertip of the finger 1 into a fingertip area 1101 near the end of the finger and a fingertip area 1102 away from the end of the finger. The method of division is based on techniques, such as a method for defining it with a fixed position, a method where a center position of the fingerprint is obtained by finding normal directions of curved lines of the fingerprint at all positions and examining a position where extension lines of the normals are most populated and division is made with the position, etc. When the fingerprint is photographed by the reflection light and the fingertip area 1101 near the end of the finger is defined, a fingerprint 1103 of the fingertip area near the end of the finger is obtained. The fingerprint of this area is considered as a part of an ellipse, and an ellipse that fits this most is calculated.

One example of calculation in the CPU 11 is such that a Huff conversion is performed using coordinates of pixels that constitute a line of the fingerprint 1103 near the end of the finger, and a long side and a short side that are parameters of the ellipse are estimated. Since the fingerprint is a structure of concentric circles, the absolute values of the long side and the short side are not uniquely defined. However, in the case where a straight line in the horizontal direction of the image is considered as a reference, an angle that this reference line makes with the long side is considered to be common. Therefore, a major axis 1105 and a minor axis 1106 of the ellipse suited to the form of the fingerprint are obtained. Incidentally, Fig. 11B shows an estimated ellipse 1104 by a typical long side and a short side. In this state, for example, by performing the rotation correction so that the orientation of the major axis 1105 may agree with the horizontal direction of the image, rotation of the finger can be corrected so that it may always be in the same direction. Fig. 11C shows an estimated ellipse after the rotation correction. By rotating the finger vein image according to this rotation angle, the orientation is normalized, so that authentication that is robust to rotation can be realized.

Moreover, by the CPU 11 conducting the magnification correction so that a line spacing of the fingerprint may become a constant value, it is possible to perform authentication that is robust to the float of the finger. For example, by conducting the magnification correction such that intervals of cross points of the line information of the fingerprint 1103 of the fingertip area in the end side of the finger and the major axis 1105 are made uniform, it is possible to conduct the correction always using the same position as a standard, and thereby to realize a stabilized magnification correction processing. Incidentally, this embodiment is applicable to any authentication device described in this specification.

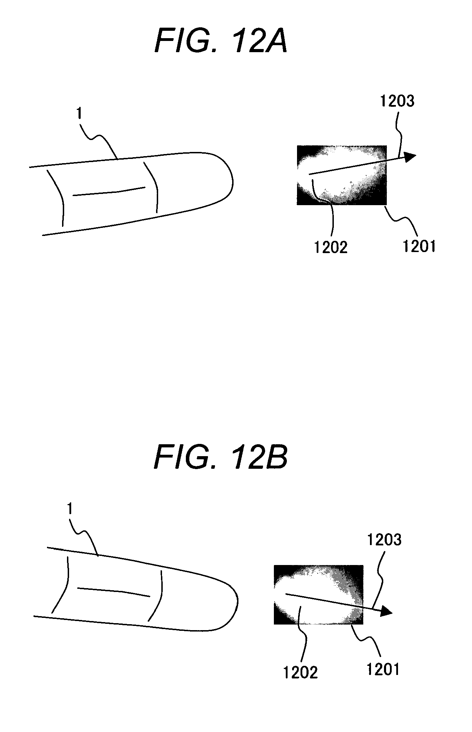

Figs. 12A and 12B are one embodiment that corrects rotation of the finger by irradiating the reflection light to the fingertip and analyzing the fingertip by the CPU 11 of the authentication processing part 10. The device configuration for executing this embodiment is the same as shown in Fig. 11A and becomes one that includes the reflection light source 1107.

When the user presents the finger 1, the light is irradiated on the surface of the finger 1 by the reflection light source 1107. Since the finger is roundish in three dimensions, the reflection light tends to hit a place where a bulge is the largest. Moreover, the finger is cylindrical and a part where the bulge is the largest distributes along the longitudinal direction of the finger. Therefore, a portion on which the reflection light hits most will run along the longitudinal direction of the finger. Therefore, by checking a direction of a portion on the image where the luminance value is high, it is possible to estimate a rotation direction of the finger.

Fig. 12A shows a reflection image at the time of finger rotation. In a reflection image 1201, a saturated area 1202 by the reflection light can be observed as a white area, and its direction 1203 is shown in the figure. As shown in the figure, in a state where the fingertip of the finger 1 directs the upper right, the direction 1203 of the saturated area 1202 of the luminance value by the reflection light distributes being slanted to the upper right, same as the finger. A calculation of the direction 1203 of the distribution of the saturated area can be done by a method where pixels of the saturated area are considered as a data group that has a two-dimensional distribution and the major axis is found by carrying out a principal component analysis on this or by other methods. Similarly, Fig. 12B shows a state where the fingertip directs to the lower right, but the direction 1203 of the saturated area 1202 directs the same direction as the direction of the finger. Comparison that is robust to the rotation shift of the finger can be realized by performing the rotation correction so that this direction may become a specific direction, for example, in a horizontal direction of the image.

Unlike the embodiment shown in Fig. 11, this embodiment can be applied also to a cheap imaging element that does not have resolution required to photograph the fingerprint, and it becomes possible to conduct the rotation correction of the finger without using finger contour information. Moreover, this embodiment is also applicable in any authentication device described in this specification.

### Eighth Embodiment

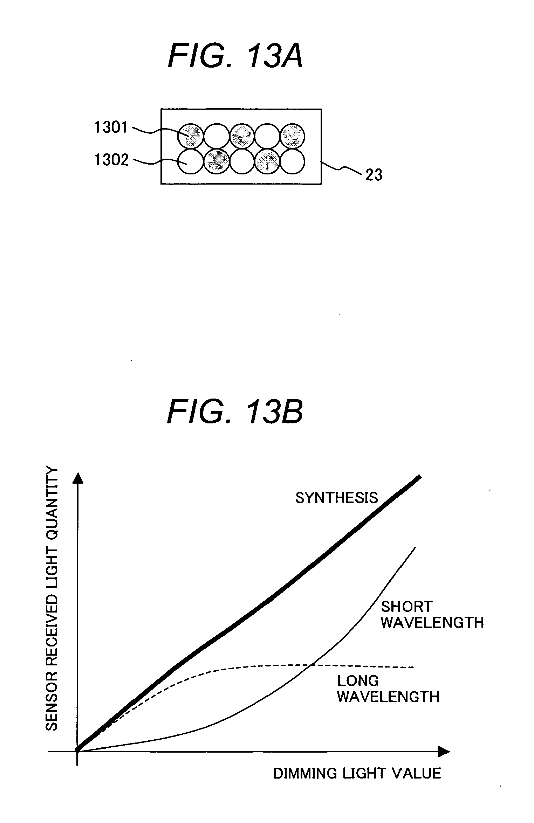

Figs. 13A and 13B are diagrams showing one configuration example of the light source including a plurality of wavelengths as an eighth embodiment. When the infrared light penetrates a living body, it causes scattering in cellular tissue. As the tissues through which the light penetrates has a thicker thickness and a distance that the light gets to penetrate is longer, a component of the light in a travel direction decreases by the scattering and light of that portion goes to expand. As the influence of this diffusion is greater, the image of the vein pattern blurs much and it becomes much difficult to see. For example, when two veins exist being adjacent to each other in parallel, there is a case where the two are seen as one blurred vein due to an influence of diffusion. Moreover, the thin blood vessel tends to be relatively affected by an influence of diffusion than a fat blood vessel, and consequently becomes difficult to observe. Thus, if the diffusion occurs, the photographing of the minute vein pattern will become difficult.

On the other hand, there is a characteristic that the longer the wavelength, the more difficult the scattering occurs. Therefore, if the light source capable of emitting the infrared light of a long wavelength is used, the quality of image will improve because a detail vein will be able to be observed. However, on the other hand, the light quantity tends to become insufficient due to an output characteristic of a general light source and a light receiving characteristic of the image sensor.

In the case of photographing a thin finger, the blood vessel tends to be thin in accompany with the thinness of the finger, and it becomes difficult to observe under an influence of blurring accompanying diffusion of light, but since the finger is thin, a vein can be observed even with a weak light quantity. On the contrary, in the case where the finger is fat, the blood vessel is also fat and tends to be hard to go out of focus, but it is necessary to irradiate intense light for its observation.

Then, for a thin finger that can be photographed sufficiently with a weak light quantity, the infrared light of a long wavelength that is small in the received light quantity but is resistive to be scattered is irradiated; for a fat finger, the infrared light of a short wavelength that is easy to be scattered but can increase the received light quantity is irradiated. Thereby in either case, it is possible to realize photographing of the clear vein.

As shown in Fig. 13A, light sources 23 each capable of irradiating a different wavelength are arranged in a grid manner. Here shown is one example where two different wavelengths are selected to make a combination. Incidentally, the embodiment is not limited to the two wavelengths. A light source 1301 of a long wavelength and a light source 1302 of a short wavelength among infrared rays are in an arrangement. Moreover, Fig. 13B shows a graph for explaining a method for controlling the light quantity in this embodiment. Finally, the light quantity irradiated for the vein photographing becomes one that is obtained by synthesizing light quantities from the light source of a long wavelength and from the light source of a short wavelength that emit lights simultaneously. In a domain where the synthesized light quantity is weak, the light quantity of the long wavelength becomes predominant, and as the synthesized light quantity is intensified, the light source of the short wavelength becomes predominant. Moreover, intensities of light quantity of the both wavelengths are adjusted so that the synthesized light quantity may not become discontinued.

In order to irradiate an optimum light quantity, it is necessary to get to know the thickness of the finger or the transmittance of the finger. For that purpose, first, an image is photographed by irradiating an arbitrary initial light quantity, and a transmittance of the finger is checked by means of an average luminance value of the image at that time. When the light sources capable of irradiating a plurality of different areas is provided, each light source is given a mutually different initial light quantity and by determining which area is close to the optimum light quantity, the transmittance of the finger is determined immediately. In this way, if the optimum light quantity adjusted by the transmittance of the finger is irradiated to the finger, generally for a thin finger that has a thin vein and is difficult to observe, the dimmed light value is adjusted so as to become weak. At this time, since in the synthesized light quantity the long wavelength light source becomes predominant, an influence of blurring by the scattering becomes small and highly accurate photographing becomes possible.

Here, a technique of changing simply the wavelengths to be used according to the transmittance of the finger without synthesizing both wavelengths and this technique will be compared. In the technique of not synthesizing, a threshold of the transmittance of the finger at which the wavelength should be switched has been fixed by initial evaluation, the wavelength is switched by comparing the measurement result of the transmittance and the threshold. However, with the finger whose transmittance is close to this threshold, a case where the threshold is stepped over and a case where it is not stepped over emerge unstably due to a measurement error, and there arises a possibility that the wavelength to be used will be different at each photographing. Since the quality of image photographed with a different wavelength differs, authentication is not stabilized. As opposed to this, in the technique of this embodiment, since the wavelengths are synthesized continuously, it becomes possible to perform authentication that is robust to variance of a determination value of the transmittance.

It is needless to say that this embodiment can be applied to all authentication device configurations described in this specification.

### Ninth Embodiment

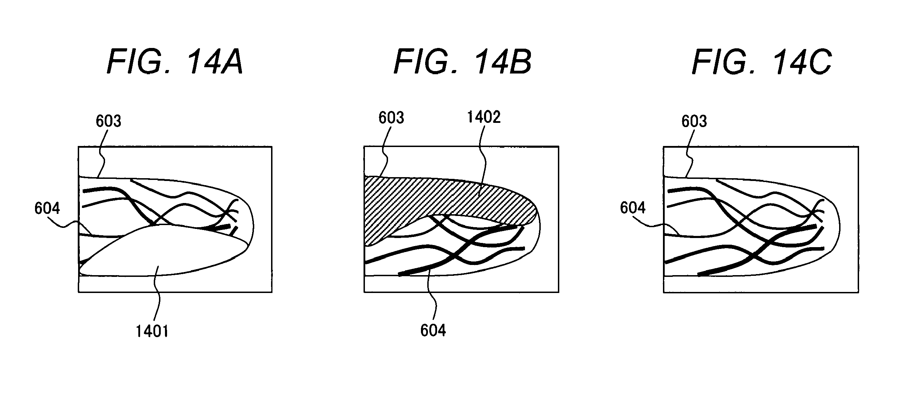

Figs. 14A - 14C are diagrams for explaining a ninth embodiment for performing light quantity adjustment of the image sensor and the imaging element under an environment where the external light exists.

For example, in the vein authentication device of the fingertip shown in Fig. 2, since the fingertip is covered with the opening section of the device, there is little possibility that the external light other than the light source will directly hit the surface of the finger to be photographed. However, like outdoors in fine weather, in a situation where the external light amounts to tens of thousands of lux, the external light itself is transmitted through the finger and reaches a camera. Normally, the light source is controlled so that light with an appropriate intensity irradiates uniformly the finger, but in such a situation, the postulated transmission image is no longer obtainable. In the case of an imaging element capable of adjusting an exposure time, it becomes possible to reduce the received light quantity by shortening the exposure time when the intense external light is irradiated. However, in the case where the external light is intensely irradiated from a specific direction, there arises an area in which the blood vessels cannot be observed because of a state where a portion of the photographed image is still brightened or is excessively darkened. This point will be concretely explained using Fig. 14.

Fig. 14A is one example of a schematic diagram of the finger vein image when the intense external light is irradiated from some directions. It turns out that there exists an area in which the finger vein 604 is not observable due to a saturated area 1401 by the external light. When the exposure time can be adjusted individually at each pixel of the image sensor, this problem can be coped with by shortening the exposure time only for the portion that became bright. However, such an imaging element is expensive and common is one that makes the exposure time of all pixels uniformly variable.

At this time, if the exposure time is controlled so that the saturated area 1401 may be darkened as shown in Fig. 14B, the vein 604 becomes observable at a location that was the saturated area 1401, but a portion where the vein 604 was observable formerly will be darkened and will become a shadow area 1402. At this time, if the light source provided in the device can irradiate light whose intensity is the same level as that of the external light, the overall luminance can be adjusted uniformly by adjusting the light quantity so that luminance becomes uniform including the external light and by subsequently shortening the exposure time. However, provision of a light source capable of irradiating light with luminance equivalent to that of the external light makes it difficult to realize reduction of cost and the miniaturization in terms of increased power consumption or a necessity of an increased number of light sources.

Then, in this embodiment, immediately after photographing of Fig. 14A that includes an area in which the light quantity was optimally adjusted and an area in which the luminance value was saturated by the external light, Fig. 14B that was photographed by shortening the exposure time so that the luminance value of the saturated area 1401 may become optimum is photographed, and areas in each of which (in each image) the vein 604 can be observed are synthesized as shown in Fig. 14C to implement the reconstruction, whereby image data of the entire vein pattern is acquired.

Below, one example of a method for controlling the exposure time by the CPU 11 of the authentication processing part 10 in this embodiment will be shown. First, the image is photographed with the light source provided to the device being turned off. At this time, if there is no saturated area, the usual light quantity adjustment processing will be performed. On the other hand, if the saturated area already exists at this time, it is determined that the external light exists, and the CPU 11 performs an exposure control and the image synthesis processing according to this embodiment.

First, the light quantity adjustment is performed by the light source provided to the device so that the vein of the not-saturated area may be clearly photographed. Thereby, an image equivalent to Fig. 14A is obtained.

Next, the exposure time is controlled so that the saturated area becomes dark. As that technique, there are a method for controlling the average luminance of the saturated area to a constant value, a method where the area of the saturated area is investigated and a control is performed so that this area may be eliminated, and the like, as will be described in detail later. Although this processing performs feedback control while photographing the image by the same technique as that of the light quantity adjustment repeatedly, by evaluating a relationship between the area of the saturated area 1401 and the optimum exposure time in advance and by estimating the optimum exposure time based on this data, the number of times of photographing until the optimum luminance value is obtained can be reduced, which contributes to speed-up of the authentication processing. Thereby, an image equivalent to that of Fig. 14B is obtained. Then, by a portion that becomes the saturated area in Fig. 14A being overlaid a pattern of the same area in Fig. 14B, an image the whole of which becomes the clear vein pattern as Fig. 14C is generated. If only two images cannot eliminate the saturated area, the exposure time is adjusted further and the third image and later images are photographed.

By repeating such exposure control and photographing, there will exist at least one or more images each pixel of which is controlled to be an optimum luminance value. That is, it becomes possible to reconstruct the image that has optimum luminance values in the whole area by synthesizing an area that was optimum before the exposure time was varied and an area that has become optimum by control of the exposure time.

According to this embodiment, the vein image on which a uniform and proper light quantity control is performed even under the intense external light having a bias while using cheap imaging elements is obtained, and therefore it becomes possible to improve the convenience of the device and to widen its applicable range.

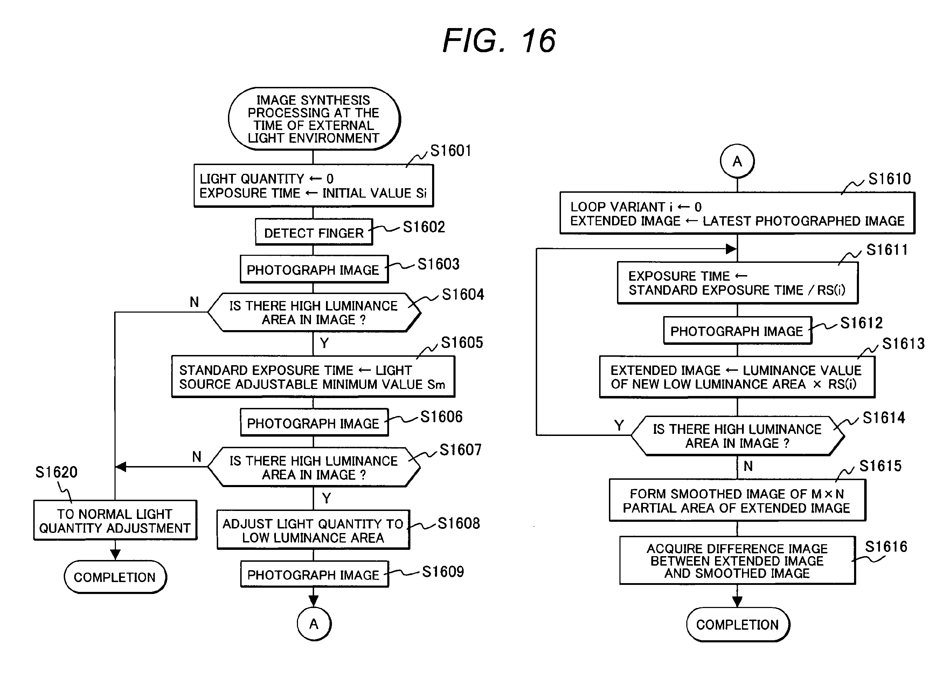

Fig. 16 shows one example of a software processing flow of a light quantity adjustment by image synthesis of this embodiment under the external light environment that the CPU 11 executes. Usually this software program is stored in the storage device 14 of Fig. 1, is developed into memory 12 in the authentication processing part 10 through the interface 13 by an instruction of the CPU 11, and is executed by the CPU 11.

First, at Step S1601 in Fig. 16, the exposure time of a camera, namely the image sensor 9 and light source intensity of the light source 23 are initialized as parameters that will be needed for photographing. The initial value of the exposure time is set to a maximum time Si that is regulated by a frame rate, and becomes about 33 ms in the case where the frame rate of the camera is, for example, 30 fps (frame per second). However, this value can be arbitrarily set to a value shorter than this depending on a characteristic of the camera, existence/absence of an infrared transmittance filter, etc. Moreover, the light quantity 0 is defined as a state when the light source 23 is being tuned off.

Next, presentation of the user's finger is detected at Step S1602. For detection of the finger, in addition to a method by a touch sensor as in the case of the authentication device shown in the embodiment described above, a method where the light source is made to blink and repeated flushing of a photographed object that is taken in the image in response to irradiation of the light source is detected may be adopted.

Next, at Step S1603, in order to detect an irradiation situation of the external light, photographing is performed at a state where the light source is turned off. In a situation without the external light, an object to be photographed is not illuminated brightly, and usually an image whose luminance value is uniformly low is obtained by the camera, namely the image sensor 9. On the other hand, in the case where the external light is irradiated, the luminance value of a part of or the entire of the image becomes high. When such an image is obtained, since the information of the finger vein is missing, an overall pattern of the finger vein is acquired by an image synthesis technique executed by the CPU 11 of this embodiment.

Especially, for photographing of the stable vein pattern, it becomes important to set the entire image within the average luminance value in a fixed range. First, at Step S1604, the CPU 11 determines whether a high luminance area exists in the image. The high luminance area is an image area where the image is saturated or whose luminance value becomes near the saturation. This is natural that existence/absence of the high luminance area can be determined by analyzing an output signal of the camera that is the image sensor 9 described previously. If there is no high luminance area, the pattern can be adjusted to have a uniform luminance value by performing a usual light quantity processing, and it is possible to acquire the overall pattern of the finger vein; therefore, the conventional light quantity processing shown at Step S1620 is performed and this processing is completed. When the high luminance area exists partially or on the whole, the flow proceeds to the next processing considering that the intense external light is being irradiated.

On the other hand, if the high luminance area exists, at Step S1605, the exposure time is set to a time Sm shorter than the initial value Si, and the camera is controlled so that an image darker than the last image may be photographed. The exposure time Sm shall be an exposure time such that: when the finger having an assumed maximum attenuation ratio is placed under an environment of no external light, the average luminance value of the image when a maximum light quantity of the light source with which the device is provided falls roughly within a target range of the light quantity adjustment. In this photographing, if an image is made too dark, the information of the blood vessel will be easily missing due to the decrease of luminance resolution; if the image is made too bright, it will become easily susceptible to the external light, and a time of the synthesis processing becomes large. Therefore, if a value designated by Sm is set up, a darker image in the range in which the image is adjustable so as to be bright with the light source of the device can be photographed; therefore, it is possible to obtain an effect that the image is hard to be influenced by the external light and the number of steps of the synthesis processing is reduced. This exposure time Sm will be used in subsequent processings as a standard exposure time. Then, an image is photographed at Step S1606.

Then, at Step S1607, it is determined whether the high luminance area exists in this image. If there is no high luminance area in this image, the finger vein pattern being uniform on the whole can be photographed with the light source of the device. That is, if additional radiation of the light source of the device is performed and an overall luminance value can be smoothed, the synthesis processing of the image will become unnecessary. In that case, the normal light quantity adjustment processing shown by Step S1620 is performed and the processing is completed. If not, the flow proceeds to the next processing. Incidentally, although Sm can also be given as an initial value of the exposure time, that case necessitates intense light quantity to be always irradiated from the light source of the device also in an environment having no external light, and power consumption becomes high. Therefore, by the method of this embodiment where Si is set up as the initial value and after that Si is switched to Sm as required, the power consumption can be held down low.

Next, at Step S1608, for a portion of the image that becomes a low luminance area, the luminance value is adjusted using the light source of the device based on the usual light quantity adjustment processing. The low luminance area refers to an area that is not the high luminance area. In the device having a plurality of light sources, light quantity adjustment is performed so that the luminance value may become as uniform as possible by controlling the light source corresponding to a place where a low luminance area occurs. After that, at Step S1609, the image at the time of light quantity adjustment being completed is acquired. This image will be used in synthesizing images.

Next, at Step S1610, a variable j used in the loop for photographing a plurality of images for image synthesis is initialized to 0. Moreover, a memory area for storing information called an extended image that will be used later for image synthesis has been initialized by substitution of the image photographed at Step S1609.

The processing from this stage enters a reconstruction processing of the vein image in which one sheet of finger vein image such that the average luminance value of the image is kept in a predetermined range is generated by a control of the exposure time and synthesis of the image. Here, the light quantity value of the light source shall not be changed, and the image is photographed only by control of the exposure time. This assumption means that in a situation where the intense external light is irradiated toward the finger of the user, if the finger and the opening section are in intimate contact with each other, leaving no gap therebetween, the external light serves as transmitted light to the finger and the vein of the finger. Therefore, the finger vein pattern can be photographed using the external light instead of irradiating the light of the light source of the device. At this time, the exposure time is altered according to the external light intensity so that the luminance value of the image may have a predetermined average value.

First, at Step S 1611, the exposure time of a magnitude of 1/Rs(i) is set up to the standard exposure time Sm. Here, Rs(i) is a value larger than unity and a different value is set up therefor at every loop. In this embodiment, Rs(i) is set to Rs(i) = 2 + i. In this case, regarding the image photographed at Step S1609, each time photographing is performed, the exposure time is changed to 1/2, 1/3, and 1/4, and a dark image can be photographed stepwisely. Then, at Step S1612, the image with this exposure time is photographed.

Next, at Step S1613, the image photographed at Step S1609 and the image photographed at Step S 1612 are synthesized to produce a synthesized image. The image photographed last and the image photographed last but one are compared, an area that was the high luminance area in the last-but-one image and becomes a low luminance area in the last photographed image, namely a new low luminance area is detected, and the luminance value of the image last photographed only in that area is multiplied by Rs(i) times. Then, only that portion is overwritten in the memory area of the extended image. The extended image is an image such that a luminance value exceeding a maximum luminance value of the originally photographed image can be stored. That is, even if a value of the luminance value of the original image multiplied by Rs(i) is stored, a value on the memory doe not overflow but can be retained. For example, if the original image is in 8-bit grayscale, a luminance value from 0 to 255 can be stored, but if the extended image is prepared as in 16-bit grayscale, a luminance value from 0 to 65535 can be stored. Moreover, a variable i for the loop is incremented by unity.

Next, at Step S 1614, it is determined finally whether the high luminance area exists in the image being photographed. If the high luminance area still exists, the processing is repeated and the same processing is performed from Step S1611. If the high luminance area does not exist, since the finger vein image whose average luminance value falls within a predetermined range can be constructed using the images being hitherto photographed, the flow breaks the loop and proceeds to the next processing. If the exposure time can be set to zero at a minimum, this loop is completed by the finite number of times. However, at Step S 1614, an upper limit may be set to the number of loops, as the synthesis processing may be performed while including a slight number of the high luminance areas, which can prevent the processing from taking a long time. The synthesis processing of the image is performed as follows.

First, at Step S 1615, each pixel of the acquired extended image is smoothed with its surrounding pixels of M×N to generate a smoothed image. Regarding the smoothing method, a method for calculating the average luminance value or a median value is applicable. Next, at Step S1616, a difference between the original extended image and the smoothed image is taken. However, a value about a half the grayscale of the luminance of the original image is added thereto so that the value may not become negative. Moreover, if the value exceeds the luminance grayscale of the original image, a grayscale correction has been conducted so that the maximum luminance value and a minimum luminance value in a difference image may be within the luminance grayscale of the original image. By this processing, the difference image that has a state where a variation portion of the luminance of the extended image is set within the luminance grayscale of the original image is obtained. At this time, if the size of M×N is specified as a size that can remove sufficiently the vein pattern information by smoothing of the image, only variation portion of the luminance value that corresponds to existence/absence of the vein pattern can be acquired.

At this stage, it is possible to synthesize the images acquired in various exposure times to obtain one sheet of the finger vein image that has a similar resolution of luminance value as the conventional image and that is free of the saturated area and has a uniform average luminance value even under the intense external light with a large deviation.

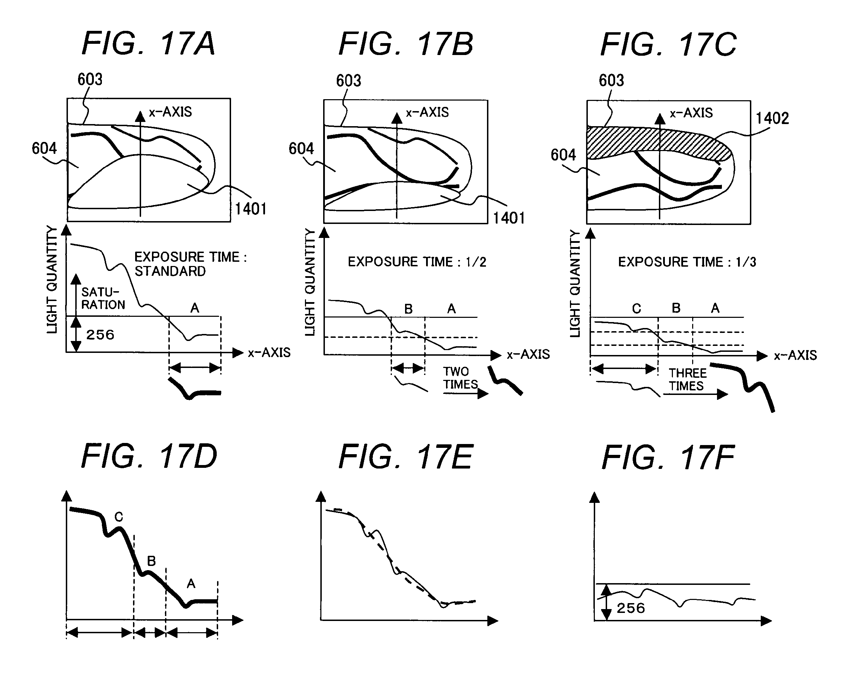

Figs. 17A - 17F are schematic diagrams showing one example of a processing procedure of synthesizing a plurality of images into one sheet of image by the above-mentioned processing flow. Although an explanation will be given illustrating three images as a plurality of images, it is natural that the processing is not limited to this.

Fig. 17A shows one example of a finger image when taking a photograph in the flow Step S1609 described above. In the finger image, an x-axis is shown in the longitudinal direction, and the sectional profile on the x-axis of the image when the x-axis is set to the transverse direction is shown below the finger image. The longitudinal axis of the sectional profile is the light quantity. Moreover, the resolution of the luminance value of the image was set to 256 levels in this embodiment, and a boundary line where the luminance of the image is saturated is shown on the profile.

In Fig. 17A, only the right-hand side of the sectional profile is less than the saturation luminance value of the original image, and the vein pattern is visually observable. However, on the left-hand side of the profile, the light quantity exceeds the saturation boundary of the image, and the vein pattern cannot be visually photographed appropriately. An area whose light quantity is less than the saturation boundary is considered as a low luminance area, and this area is designated by A. Moreover, this image itself is retained as an initial state of the extended image.

Fig. 17B is an image photographed at Step S1612 and its luminance profile when the exposure time is shortened to 1/2 of the standard value. Since in the imaging element that is a common photo detector, the exposure time is proportional to the received light quantity of light, if the exposure time is set to one half, a contraction scale of the light quantity that is a vertical axis of the profile curved line will also be set to one half in proportion to this. Thereby, the vein pattern in the vicinity of the center of the image that was saturated in Fig. 17A becomes able to be newly photographed. This area is designated by B. Moreover, since the profile of the area A is also compressed to one half, the pattern becomes harder to observe than in a state where the area A was observed in Fig. 17A. Then, only a profile obtainable in the area B is extracted from this image, and the luminance value is multiplied two times so that the contraction scale of one half is restored to the original and is stored in an area of the extended image.

Similarly, Fig. 17C is an image when the exposure time is shortened 1/3 times the standard. An area C newly becomes a low luminance area. Therefore, the luminance value of the area C is multiplied three times and is stored in the extended image. Moreover, at a time when photographing this image, the saturated area is no longer observed for all the areas. Therefore, the loop of photographing is completed by the determination of Step S1614.

Fig. 17D is a luminance value of the extended image in the x-axis described above. Regarding the area A, a profile of Fig. 17A is stored; regarding the area B, a profile that was acquired in Fig. 17B with luminance value doubled is stored. However, it is stored with values uniformly elevated so that the area B and the area A have the same luminance value at their boundary. Similarly, regarding the area C, the profile that was acquired in Fig. 17C with the luminance value tripled is stored considering continuity with the area B. Although the profile of each area is obtained from a different image, since contraction scale of the vertical axis indicating the light quantity is converted for magnification depending on the contraction ratio of the exposure time, the continuity of a gradient of the curved line at boundaries of respective areas is retained. Moreover, since the value is elevated so that the luminance values at the boundaries may agree with one another, the continuity of absolute values at each boundary is also retained.

For example, in the case of the area B, since the luminance value becomes 1/2 by the exposure time being shortened to 1/2, discontinuity is brought to the gradient of the curved line and the absolute value at the boundary of the area A and the area B. However, by performing the correction so that the light quantity based on the exposure time, namely the luminance value of the area B may equalize to the luminance value at the boundary of the area A, the continuity with the area A can be maintained. This situation is the same also at the boundary between the area C and the area B.

Therefore, the luminance profile of the extended image is kept in continuity as a whole. However, strictly, since when performing repeated photographing, the external light and the position of the finger include variations, there may be a case where the shift occurs. At this time, a smoothing processing of the image may be performed to the boundary and its vicinity so that smooth contact may be established near the boundary.

Fig. 17E is a result of the smoothing processing of M×N pixels to the extended image that is performed at Step S1615, and its profile is shown by a dashed line. Moreover, Fig. 17F shows a processing result of subtraction of Fig. 17E from Fig. 17D and addition of 128 that is a half value of the grayscale of the original image to it. The figure shows that an image that contains unevenness information of the vein pattern obtained from images of respective exposure times in a 256 grayscales of the original image without a saturated area can be obtained. Therefore, by delivering this image, as it is, to a vein pattern extraction processing that is a subsequent stage authentication processing procedure, the authentication processing can be continued. Incidentally, regarding Fig. 17F, if the subsequent stage vein extraction processing itself is altered and the authentication processing is configured so that the extended image shown in this procedure may be accepted, Step S1615 and Step S1616 will be able to be omitted.

According to this embodiment explained in detail above, even when the intense external light having a large deviation spatially exists, the stable authentication processing can be realized.

### 10th Embodiment

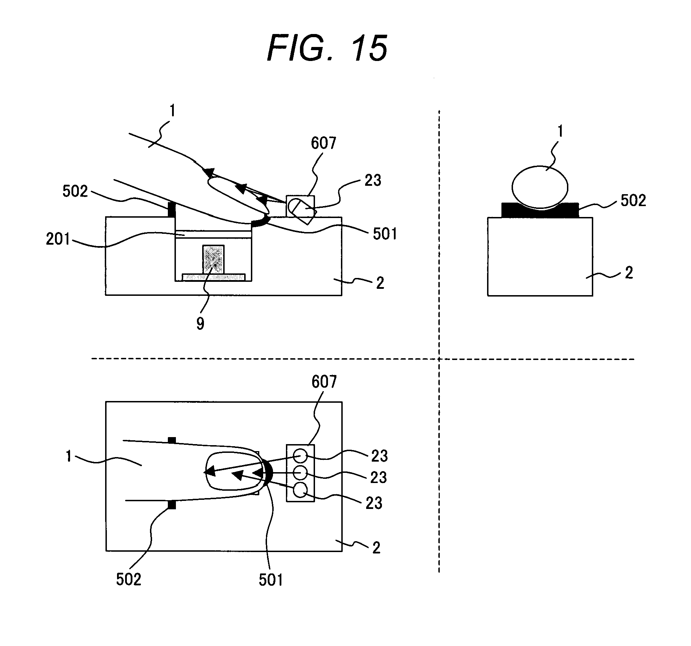

Fig. 15 is a block diagram of an authentication system of a 10th embodiment. The upper left of Fig. 15 is a device sectional view, the lower left is a top view, and the upper right is a side view when seeing the device sectional view from the left-hand side. The device includes the fingertip mounting base 501, the finger central mounting base 502, the light source support part 607, the image sensor 9, and the light source 23. The fingertip mounting base 501 and the finger central mounting base 502 are installed so as to sandwich the opening section 201. The fingertip mounting base 501 is a hollow that corresponds to a curvature of the fingertip, and the finger central mounting base 502 is a convex mounting base for supporting the base side of the finger that is away from the fingertip by a width of the opening section 201 with a cross section that has a hollow corresponding to the cross section curve of the finger, on this hollow the finger 1 being placed.

These can prevent the position shift in the transverse direction of the fingertip or the entire finger. Moreover, a difference in height is provided between the fingertip mounting base 501 and the finger central mounting base 502 so that the fingertip side may lower when the finger is placed. In other words, the fingertip mounting base 501 is formed at a position near the opening section 201, not near the finger central mounting base 502. Moreover, although the light source 23 is supported by the light source support part 607, the light source support part 607 protrudes upward so that the light source 23 may be set at a position slightly higher than the surface of the input device 2. Moreover, the opening section 201 is installed at a position slightly caved in from the surface of the case of the input device 2 so that the finger surface may not contact with the opening section 201 when the finger 1 is placed.

The user sets and places the finger 1 corresponding to the fingertip mounting base 501 and the finger central mounting base 502. Upon placement of the finger 1, the image sensor 9 will be activated, and at the same time the light source 23 will irradiate light to the finger 1. The light penetrates the finger 1 and the image sensor 9 photographs the transmitted light. The light source 23 irradiates the root and its vicinity of a nail from below the front of the fingertip. It is possible to realize the vein photographing with the transmitted light by irradiating light to the back side of the finger to photograph the palm side of the finger by making use of a relationship of an angle at which the finger 1 is placed and a height at which the light source 23 is installed. Therefore, the vein pattern of the fingertip and its vicinity can be photographed clearly, and highly accurate finger vein authentication can be realized using this image. Incidentally, as a method for detecting the finger, contact detection means such as a touch sensor may be installed in the fingertip mounting base 501 or the finger central mounting base. Alternatively, it is all right that activation of the image sensor is performed by different means such as key entry, and the existence/absence of the finger is determined while the image is being photographed.

The device according to this embodiment, as is clear from the device sectional view and the top view, three light sources are arranged, and their optical axes are shifted so that each may irradiates a slightly different portion. In this example, they are installed so as to irradiate three areas: the base side of a nail, a center of the nail, and the end side of the nail. As referring to in the embodiment described above, by independently controlling each light source and by performing optimum control of each portion, light quantity adjustment adapted to various thicknesses and various shapes of fingers becomes possible.

In the configuration of this embodiment, slight unevenness exists on the device surface. However, the light for irradiating the fingertip is sufficient if the light quantity arrives a nail and the vicinity of the root of the nail, and there is no necessity of irradiating the light on the base side away from the first joint of the finger. Therefore, the height of the light source 23 can be lowered compared with the finger vein authentication device for photographing the entire finger like the conventional technology. This enables the surface of the device to be formed close to a planar structure and such a structure increases flexibility regarding devices that can be mounted. Moreover, although in this embodiment, the light source 23 protrudes slightly from the surface of the input device 2, the light source 23 can be installed on the same plane as the surface of the input device 2 by elevating the finger central mounting base 502 or making the fingertip mounting base 501 cave in more, for example. That is, it is needless to say that, if the installation can keep constant a relationship between an angle at which the finger 1 is placed and an angle of the light at which it is irradiated from the light source 23, the light source will be able to set at an arbitrary height according to an apparatus to which the authentication device is built in, and is not limited to the height being illustrated.

The present invention makes it possible to improve the authentication accuracy in the finger vein authentication device while maintaining convenience, and such a device is very useful as the personal authentication device.

## Claims

1. A personal authentication device for performing authentication by a vein (604) of a finger (1), comprising:
a case that includes a finger rest on which the finger (1) is mounted and an opening section (201; 601) for photographing the finger (1) mounted on the finger rest;
a light source (23) for irradiating light toward the finger (1);
an image sensor (9) for imaging light transmitted from the finger (1) through the opening section (201; 601); and
an image processing part (10) for processing the image imaged by the image sensor (9);
wherein the light source (23) is installed in front of the finger (1) mounted on the finger rest, and an irradiation direction of the light of the light source (23) is directed to the back side of the finger (1).

2. The device of claim 1, wherein
the light source (23) is installed on the surface of the case or below the surface, and the irradiation direction of the light of the light source (23) is directed upward from the case surface, and
preferably a light shielding member (503; 701) is disposed between the finger rest of the case and the light source (23).

3. The device of claim 1 or 2, wherein
the opening section (201; 601) is formed with a member transparent to the light of the light source (23), is placed at a position lower than the case surface, and includes a protrusion part that serves as a fingertip mounting base (202; 605) at its fingertip side, and
the case preferably includes side walls (602; 801) for light shielding on both sides of the opening section (201; 601).

4. The device of any preceding claim, wherein
the finger rest consists of a fingertip mounting base (202; 605) on which a fingertip of the finger (1) is mounted and a finger central mounting base (502) at which a central part of the finger (1) is mounted, and
the fingertip mounting base (202; 605) is installed at a position nearer to the opening section (201; 601) than to the finger central mounting base (502).

5. The device of any preceding claim, wherein
the light source (23) is made up of a plurality of light emitting elements, and
each of the plurality of light emitting elements irradiates a different position of the back side of the finger (1) mounted on the finger rest.

6. A personal authentication device for performing authentication by a vein (604) of a finger (1), comprising:
a case that includes a finger rest on which the finger (1) is mounted and an opening section (201; 601) for photographing the finger (1) mounted on the finger rest;
a light source (23) for emitting light toward the finger (1);
an image sensor (9) for imaging light transmitted from the finger (1) through the opening section (201; 601);
an image processing part (10) for processing the image imaged by the image sensor (9);
a support part (203; 401-b) that supports the light source (23) and can make the light source (23) move to above the fingertip of the finger (1); and
a linking part (204; 402) for linking the support part (203; 401-b) with the case;
wherein the light source (23) moves to above the fingertip by the support part (203;
401-b) moving along a major axis (1105) direction of the finger (1).

7. The device of any preceding claim, wherein
the image sensor (9) photographs the image including a contour (603) of the fingertip of the finger (1), and
the image processing part (10) extracts the contour (603) of the fingertip based on the photographed image.

8. The device of any preceding claim, wherein
the finger rest has a hollow, and/or
the light source (23) is made up of a plurality light emitting elements (1301, 1302) that emit a plurality of wavelengths.

9. The device of any preceding claim, wherein the vein (604) is a vein of a joint part of the finger (1), or
a vein of an end portion of the finger (1).

10. The device of any preceding claim, further comprising a fingerprint detection part (9, 1107) for detecting a fingerprint (1103) of the finger (1),
wherein the image processing part (10) corrects an angle at which the finger (1) of the image is placed or a magnifying ratio based on the fingerprint (1103) detected by the fingerprint detection part (9, 1107).

11. The device of any preceding claim, wherein
the finger rest is provided on the periphery of the opening section (201; 601),
the finger rest has a curvature that is made to fit a shape of the finger (1), and preferably, in the finger rest, its cross section is slanted to the opening section side as a location on the cross section comes nearer to the opening section (201; 601).

12. A personal authentication device for performing authentication by a vein (604) of a finger (1), comprising:
an input device (2) that includes a finger rest on which the finger (1) is placed,
an opening section (201; 601) for photographing the finger (1) that is placed on the finger rest,
a light source (23) for irradiating light toward the finger (1), and
an imaging element (9) for imaging transmitted light from the finger (1); and
an image processing part (10) for processing an image acquired by the input device (2);
wherein the image processing part (10) is adapted to
detect a portion on which external light is irradiated to the image imaged by the imaging element (9),
control an exposure time of the imaging element (9) so that the detected portion on which the external light is irradiated may become with a proper luminance value, and
reconstruct a vein image of the finger (1) by synthesizing portions each having a proper luminance value among a plurality of the images that were obtained under different exposure conditions.

13. The device of claim 12, wherein the image processing part (10) specifies a high luminance area (1202; 1401) of the image as a portion to which the external light is irradiated in the image, and, if the high luminance area (1202; 1401) disappears in the image obtained by controlling the exposure time of the imaging element (9), will start reconstruction of the vein image of the finger (1).

14. The device of claim 12 or 13, wherein, in obtaining a plurality of the images by controlling the exposure time, when the plurality of the images reaches a previously determined number, the image processing part (10) starts reconstruction of the vein image of the finger (1) based on the predetermined number of the images, regardless of existence/absence of the high luminance area (1202; 1401).

15. The device of any of claims 12 to 14, wherein, when synthesizing a plurality of the images, the image processing part (10) conducts correction in the images obtained by controlling the exposure time so that luminance values at a boundary of the areas that become portions having proper luminance values may agree with each other.
